(19) Europäisches Patentamt
European Patent Office
Office européen des brevets

(11) **EP 4 231 576 A1**

(12) **EUROPEAN PATENT APPLICATION**
published in accordance with Art. 153(4) EPC

(43) Date of publication:
**23.08.2023 Bulletin 2023/34**

(21) Application number: **21883296.2**

(22) Date of filing: **21.10.2021**

(51) International Patent Classification (IPC):
*H04L 5/00* (2006.01)     *H04L 1/08* (2006.01)
*H04B 7/06* (2006.01)     *H04W 52/14* (2009.01)
*H04W 72/04* (2023.01)     *H04W 72/12* (2023.01)

(52) Cooperative Patent Classification (CPC):
**H04B 7/06; H04L 1/08; H04L 5/00; H04W 52/14;**
**H04W 72/04; H04W 72/12**

(86) International application number:
**PCT/KR2021/014825**

(87) International publication number:
**WO 2022/086228 (28.04.2022 Gazette 2022/17)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **22.10.2020 KR 20200137604**

(71) Applicant: **LG Electronics Inc.**
**Yeongdeungpo-gu**
**Seoul 07336 (KR)**

(72) Inventors:
• **GO, Seongwon**
**Seoul 06772 (KR)**
• **KIM, Hyungtae**
**Seoul 06772 (KR)**

• **YANG, Suckchel**
**Seoul 06772 (KR)**
• **KIM, Jaehyung**
**Seoul 06772 (KR)**
• **KO, Hyunsoo**
**Seoul 06772 (KR)**
• **KANG, Jiwon**
**Seoul 06772 (KR)**
• **BAE, Duckhyun**
**Seoul 06772 (KR)**
• **SHIM, Jaenam**
**Seoul 06772 (KR)**

(74) Representative: **Mooser, Sebastian Thomas**
**Wuesthoff & Wuesthoff**
**Patentanwälte PartG mbB**
**Schweigerstraße 2**
**81541 München (DE)**

(54) **METHOD FOR TRANSMITTING OR RECEIVING PHYSICAL UPLINK CONTROL CHANNEL IN WIRELESS COMMUNICATION SYSTEM, AND APPARATUS THEREOF**

(57)     A method of a user equipment (UE) to transmit a physical uplink control channel (PUCCH) in a wireless communication system is disclosed. The method comprises receiving configuration information related to the PUCCH, and transmitting the PUCCH based on the configuration information. The PUCCH is repeatedly transmitted based on a specific repetition factor, and the specific repetition factor is configured based on a PUCCH resource for a transmission of the PUCCH. A value of the specific repetition factor is determined based on at least one of pre-configured criteria.

**FIG. 11**

```
           Start
             │
             ▼
Receive configuration information related to PUCCH ──S1110
             │
             ▼
Transmit PUCCH based on configuration information ──S1120
             │
             ▼
           End
```

**Description**

## TECHNICAL FIELD

The present disclosure relates to a method of transmitting and receiving a physical uplink control channel in a wireless communication system and a device thereof.

## BACKGROUND

Mobile communication systems have been developed to provide a voice service while ensuring the activity of a user. However, in the mobile communication system, not only a voice, but also a data service is extended. At present, there is a shortage of resources due to an explosive increase in traffic, and users demand a higher speed service. As a result, a more advanced mobile communication system is required.

Requirements for a next-generation mobile communication system should be able to support the acceptance of explosive data traffic, a dramatic increase in the per-user data rate, the acceptance of a significant increase in the number of connected devices, very low end-to-end latency, and high-energy efficiency. To this end, various technologies are researched, which include dual connectivity, massive multiple input multiple output (MIMO), in-band full duplex, non-orthogonal multiple access (NOMA), super wideband support, device networking, and the like.

## SUMMARY

A repetition factor for PUCCH repetition is configured by RRC signaling (e.g., nrofSlots(2,4,8)). Considering M-TRP PUCCH transmission as well as S-TRP PUCCH transmission, the number of repetitions for PUCCH transmission for different TRPs needs to be applied more instantaneously.

The present disclosure provides a method of dynamically indicating a PUCCH repetition factor.

Technical objects to be achieved in the present disclosure are not limited to the aforementioned technical objects, and other technical objects not described above may be evidently understood by a person having ordinary skill in the art to which the present disclosure pertains from the following description.

In one aspect of the present disclosure, there is provided a method of a user equipment (UE) to transmit a physical uplink control channel (PUCCH) in a wireless communication system, the method comprising receiving configuration information related to the physical uplink control channel (PUCCH), and transmitting the PUCCH based on the configuration information.

The PUCCH is repeatedly transmitted based on a specific repetition factor, and the specific repetition factor is configured based on a PUCCH resource for a transmission of the PUCCH.

A value of the specific repetition factor is determined based on at least one of pre-configured criteria.

The pre-configured criteria may be related to at least one of i) a PUCCH format, ii) a number of symbols related to the PUCCH resource, iii) a number of resource elements (REs) related to the PUCCH resource, or iv) a PUCCH resource set index.

The value of the specific repetition factor may be determined based on the PUCCH format related to the PUCCH.

The value of the specific repetition factor may be determined based on the number of symbols configured in the PUCCH resource.

The value of the specific repetition factor may be determined based on the number of REs capable of mapping uplink control information (UCI) in the PUCCH resource related to the PUCCH.

The value of the specific repetition factor may be determined based on the PUCCH resource set index to which the PUCCH resource related to the PUCCH belongs.

The pre-configured criteria may be based on a plurality of repetition levels.

A specific repetition level among the plurality of repetition levels may be determined based on the number of symbols configured in the PUCCH resource, and the value of the specific repetition factor may be determined based on the specific repetition level.

The pre-configured criteria may be related to a specific field of downlink control information (DCI).

The value of the specific repetition factor may be determined based on a time domain resource allocation (TDRA) field for a time domain resource allocation of a physical downlink shared channel (PDSCH) of the DCI.

The value of the specific repetition factor may be determined based on a PDSCH-to-HARQ feedback timing indicator field of the DCI.

The value of the specific repetition factor may be determined based on a value of a repetition factor related to a physical downlink shared channel (PDSCH) or a physical uplink shared channel (PUSCH) scheduled by the DCI.

The value of the specific repetition factor may be one of values mapped to PUCCH resources indicated by a PUCCH Resource Indicator (PRI) field of the DCI.

The value of the specific repetition factor may be determined based on i) a value of a pre-configured repetition factor and ii) a specific value based on the pre-configured criteria.

The value of the specific repetition factor may be determined as i) a value obtained by multiplying or dividing the value of the pre-configured repetition factor by the specific value or ii) a value obtained by adding or subtracting the specific value to or from the value of the pre-configured repetition factor.

The value of the specific repetition factor may be determined in units of slot or symbol.

The transmission of the PUCCH may be performed based on an intra-slot repetition or an inter-slot repetition.

The PUCCH may be related to HARQ-ACK information.

In another aspect of the present disclosure, there is provided a user equipment (UE) transmitting a physical uplink control channel (PUCCH) in a wireless communication system, the UE comprising one or more transceivers, one or more processors configured to control the one or more transceivers, and one or more memories operably connected to the one or more processors.

The one or more memories store instructions, that are configured to allow the one or more processors to perform operations, based on being executed by the one or more processors.

The operations comprise receiving configuration information related to the physical uplink control channel (PUCCH), and transmitting the PUCCH based on the configuration information.

The PUCCH is repeatedly transmitted based on a specific repetition factor, and wherein the specific repetition factor is configured based on a PUCCH resource for a transmission of the PUCCH.

A value of the specific repetition factor is determined based on at least one of pre-configured criteria.

In another aspect of the present disclosure, there is provided a device comprising one or more memories, and one or more processors functionally connected to the one or more memories.

The one or more memories store instructions, that are configured to allow the one or more processors to perform operations, based on being executed by the one or more processors.

The operations comprise receiving configuration information related to a physical uplink control channel (PUCCH), and transmitting the PUCCH based on the configuration information.

The PUCCH is repeatedly transmitted based on a specific repetition factor, and the specific repetition factor is configured based on a PUCCH resource for a transmission of the PUCCH.

A value of the specific repetition factor is determined based on at least one of pre-configured criteria.

In another aspect of the present disclosure, there are provided one or more non-transitory computer readable mediums storing one or more instructions.

The one or more instructions are configured, based on being executed by one or more processors, to allow the one or more processors to perform operations.

The operations comprise receiving configuration information related to a physical uplink control channel (PUCCH), and transmitting the PUCCH based on the configuration information.

The PUCCH is repeatedly transmitted based on a specific repetition factor, and the specific repetition factor is configured based on a PUCCH resource for a transmission of the PUCCH.

A value of the specific repetition factor is determined based on at least one of pre-configured criteria.

In another aspect of the present disclosure, there is provided a method of a base station to receive a physical uplink control channel (PUCCH) in a wireless communication system, the method comprising transmitting configuration information related to the physical uplink control channel (PUCCH), and receiving the PUCCH based on the configuration information.

The PUCCH is repeatedly transmitted based on a specific repetition factor, and the specific repetition factor is configured based on a PUCCH resource for a transmission of the PUCCH.

A value of the specific repetition factor is determined based on at least one of pre-configured criteria.

In another aspect of the present disclosure, there is provided a base station receiving a physical uplink control channel (PUCCH) in a wireless communication system, the base station comprising one or more transceivers, one or more processors configured to control the one or more transceivers, and one or more memories operably connected to the one or more processors.

The one or more memories store instructions, that are configured to allow the one or more processors to perform operations, based on being executed by the one or more processors.

The operations comprise transmitting configuration information related to the physical uplink control channel (PUCCH), and receiving the PUCCH based on the configuration information.

The PUCCH is repeatedly transmitted based on a specific repetition factor, and the specific repetition factor is configured based on a PUCCH resource for a transmission of the PUCCH.

A value of the specific repetition factor is determined based on at least one of pre-configured criteria.

According to aspects of the present disclosure, the value of the specific repetition factor can be determined based on the pre-configured criteria. Accordingly, an indication of the repetition factor for a PUCCH repetition can be dynamically performed.

Effects which may be obtained from the disclosure are not limited by the above effects, and other effects that have not been mentioned may be clearly understood from the following description by those skilled in the art to which the disclosure pertains.

**BRIEF DESCRIPTION OF THE DRAWINGS**

The accompany drawings, which are included to provide a further understanding of the present disclosure and are incorporated on and constitute a part of this specification illustrate embodiments of the present disclosure and together with the description serve to explain the principles of the present disclosure.

FIG. 1 illustrates an example of an overall system structure of NR to which a method proposed in the disclosure may be applied.

FIG. 2 illustrates a relationship between an uplink frame and a downlink frame in a wireless communication system to which a method proposed in the disclosure may be applied.

FIG. 3 illustrates an example of a frame structure in an NR system.

FIG. 4 illustrates an example of a resource grid supported by a wireless communication system to which a method proposed in the disclosure may be applied.

FIG. 5 illustrates examples of a resource grid for each antenna port and numerology to which a method proposed in the disclosure may be applied.

FIG. 6 illustrates physical channels and general signal transmission.

FIG. 7 illustrates an example of a downlink transmission/reception operation.

FIG. 8 illustrates an example of an uplink transmission/reception operation.

Figure 9 illustrates an example of a transmission/reception method for improving reliability using transmission in multiple TRPs.

FIG. 10 is a flowchart illustrating a signaling procedure related to a PUCCH repetition to which a method described in the present disclosure is applicable.

FIG. 11 is a flowchart illustrating a method for a UE to transmit a physical uplink control channel in a wireless communication system according to an embodiment of the present disclosure.

FIG. 12 is a flowchart illustrating a method for a base station to receive a physical uplink control channel in a wireless communication system according to another embodiment of the present disclosure.

FIG. 13 illustrates a communication system 1 applied to the present disclosure.

FIG. 14 illustrates wireless devices applicable to the present disclosure.

FIG. 15 illustrates a signal processing circuit for a transmission signal.

FIG. 16 illustrates another example of a wireless device applied to the present disclosure.

FIG. 17 illustrates a hand-held device applied to the present disclosure.

**DETAILED DESCRIPTION**

Reference will now be made in detail to embodiments of the disclosure, examples of which are illustrated in the accompanying drawings. A detailed description to be disclosed below together with the accompanying drawing is to describe exemplary embodiments of the disclosure and not to describe a unique embodiment for carrying out the disclosure. The detailed description below includes details to provide a complete understanding of the disclosure. However, those skilled in the art know that the disclosure may be carried out without the details.

In some cases, in order to prevent a concept of the disclosure from being ambiguous, known structures and devices may be omitted or illustrated in a block diagram format based on core functions of each structure and device.

Hereinafter, downlink (DL) means communication from the base station to the terminal and uplink (UL) means communication from the terminal to the base station. In downlink, a transmitter may be part of the base station, and a receiver may be part of the terminal. In uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

The following technology may be used in various radio access system including CDMA, FDMA, TDMA, OFDMA, SC-FDMA, and the like. The CDMA may be implemented as radio technology such as Universal Terrestrial Radio Access (UTRA) or CDMA2000. The TDMA may be implemented as radio technology such as a global system for mobile communications (GSM)/general packet radio service (GPRS)/enhanced data rates for GSM evolution (EDGE). The OFDMA may be implemented as radio technology such as Institute of Electrical and Electronics Engineers (IEEE) 802.11 (Wi-Fi), IEEE 802.16 (WiMAX), IEEE 802.20, Evolved UTRA (E-UTRA), or the like. The UTRA is a part of Universal Mobile Telecommunications System (UMTS). 3rd Generation Partnership Project (3GPP) Long Term Evolution (LTE) is a part of Evolved UMTS (E-UMTS) using the E-UTRA and LTE-Advanced (A)/LTE-A pro is an evolved version of the 3GPP LTE. 3GPP NR (New Radio or New Radio Access Technology) is an evolved version of the 3GPP LTE/LTE-A/LTE-A pro.

For clarity of description, the technical spirit of the disclosure is described based on the 3GPP communication system (e.g., LTE-A or NR), but the technical spirit of the disclosure are not limited thereto. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. The LTE/NR may be referred to as a 3GPP system, "xxx" means a detailed standard document number. The LTE/NR may be collectively referred to as the 3GPP system. Matters disclosed in a standard document opened before the disclosure may be referred to for a background art, terms, omissions, etc., used for describing the disclosure. For example, the following documents may be referred to.

3GPP LTE

- 36.211: Physical channels and modulation
- 36.212: Multiplexing and channel coding
- 36.213: Physical layer procedures
- 36.300: Overall description
- 36.331: Radio Resource Control (RRC)

3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 36.331: Radio Resource Control (RRC) protocol specification

As more and more communication devices require larger communication capacity, there is a need for improved mobile broadband communication compared to the existing radio access technology (RAT). Further, massive machine type communications (MTCs), which provide various services anytime and anywhere by connecting many devices and objects, are one of the major issues to be considered in the next generation communication. In addition, a communication system design considering a service/LTE sensitive to reliability and latency is being discussed. The introduction of next generation radio access technology considering enhanced mobile broadband communication (eMBB), massive MTC (mMTC), ultra-reliable and low latency communication (URLLC) is discussed, and in the disclosure, the technology is called new RAT for convenience. The NR is an expression representing an example of 5G radio access technology (RAT).

Three major requirement areas of 5G include (1) an enhanced mobile broadband (eMBB) area, (2) a massive machine type communication (mMTC) area and (3) an ultra-reliable and low latency communications (URLLC) area.

Some use cases may require multiple areas for optimization, and other use case may be focused on only one key performance indicator (KPI). 5G support such various use cases in a flexible and reliable manner.

eMBB is far above basic mobile Internet access and covers media and entertainment applications in abundant bidirectional tasks, cloud or augmented reality. Data is one of key motive powers of 5G, and dedicated voice services may not be first seen in the 5G era. In 5G, it is expected that voice will be processed as an application program using a data connection simply provided by a communication system. Major causes for an increased traffic volume include an increase in the content size and an increase in the number of applications that require a high data transfer rate. Streaming service (audio and video), dialogue type video and mobile Internet connections will be used more widely as more devices are connected to the Internet. Such many application programs require connectivity always turned on in order to push real-time information and notification to a user. A cloud storage and application suddenly increases in the mobile communication platform, and this may be applied to both business and entertainment. Furthermore, cloud storage is a special use case that tows the growth of an uplink data transfer rate. 5G is also used for remote business of cloud. When a tactile interface is used, further lower end-to-end latency is required to maintain excellent user experiences. Entertainment, for example, cloud game and video streaming are other key elements which increase a need for the mobile broadband ability. Entertainment is essential in the smartphone and tablet anywhere including high mobility environments, such as a train, a vehicle and an airplane. Another use case is augmented reality and information search for entertainment. In this case, augmented reality requires very low latency and an instant amount of data.

Furthermore, one of the most expected 5G use case relates to a function capable of smoothly connecting embedded sensors in all fields, that is, mMTC. Until 2020, it is expected that potential IoT devices will reach 20.4 billions. The industry IoT is one of areas in which 5G performs major roles enabling smart city, asset tracking, smart utility, agriculture and security infra.

URLLC includes a new service which will change the industry through remote control of major infra and a link having ultra-reliability/low available latency, such as a self-driving vehicle. A level of reliability and latency is essential for smart grid control, industry automation, robot engineering, drone control and adjustment.

Multiple use cases are described more specifically.

5G may supplement fiber-to-the-home (FTTH) and cable-based broadband (or DOCSIS) as means for providing a stream evaluated from gigabits per second to several hundreds of mega bits per second. Such fast speed is necessary to deliver TV with resolution of 4K or more (6K, 8K or more) in addition to virtual reality and augmented reality. Virtual reality (VR) and augmented reality (AR) applications include immersive sports games. A specific application program may require a special network configuration. For example, in the case of VR game, in order for game companies to minimize latency, a core server may need to be integrated with the edge network server of a network operator.

An automotive is expected to be an important and new motive power in 5G, along with many use cases for the mobile communication of an automotive. For example, entertainment for a passenger requires a high capacity and a high mobility mobile broadband at the same time. The reason for this is that future users continue to expect a high-quality connection regardless of their location and speed. Another use example of the automotive field is an augmented reality dashboard. The augmented reality dashboard overlaps and displays information, identifying an object in the dark and notifying a driver of the distance and movement of the object, over a thing seen by the driver through a front window. In the future, a wireless module enables communication between automotives, information exchange between an automotive and a supported infrastructure, and information exchange between an automotive and other connected devices (e.g., devices accompanied by a pedestrian). A safety system guides alternative courses of a behavior so that a driver may drive more safely, thereby reducing a danger of an accident. A next step will be a remotely controlled or self-driven vehicle. This requires very reliable, very fast communication between different self-driven vehicles and between an automotive and infra. In the future, a self-driven vehicle may perform all driving activities, and a driver will be focused on things other than traffic, which cannot be identified by an automotive itself. Technical requirements of a self-driven vehicle require ultra-low latency and ultra-high speed reliability so that traffic safety is increased up to a level which cannot be achieved by a person.

A smart city and smart home mentioned as a smart society will be embedded as a high-density radio sensor network. The distributed network of intelligent sensors will identify the cost of a city or home and a condition for energy-efficient maintenance. A similar configuration may be performed for each home. All of a temperature sensor, a window and heating controller, a burglar alarm and home appliances are wirelessly connected. Many of such sensors are typically a low data transfer rate, low energy and a low cost. However, for example, real-time HD video may be required for a specific type of device for surveillance.

The consumption and distribution of energy including heat or gas are highly distributed and thus require automated control of a distributed sensor network. A smart grid collects information, and interconnects such sensors using digital information and a communication technology so that the sensors operate based on the information. The information may include the behaviors of a supplier and consumer, and thus the smart grid may improve the distribution of fuel, such as electricity, in an efficient, reliable, economical, production-sustainable and automated manner. The smart grid may be considered to be another sensor network having small latency.

A health part owns many application programs which reap the benefits of mobile communication. A communication system may support remote treatment providing clinical treatment at a distant place. This helps to reduce a barrier for the distance and may improve access to medical services which are not continuously used at remote farming areas. Furthermore, this is used to save life in important treatment and an emergency condition. A radio sensor network based on mobile communication may provide remote monitoring and sensors for parameters, such as the heart rate and blood pressure.

Radio and mobile communication becomes increasingly important in the industry application field. Wiring requires a high installation and maintenance cost. Accordingly, the possibility that a cable will be replaced with reconfigurable radio links is an attractive opportunity in many industrial fields. However, to achieve the possibility requires that a radio connection operates with latency, reliability and capacity similar to those of the cable and that management is simplified. Low latency and a low error probability is a new requirement for a connection to 5G.

Logistics and freight tracking is an important use case for mobile communication, which enables the tracking inventory and packages anywhere using a location-based information system. The logistics and freight tracking use case typically requires a low data speed, but a wide area and reliable location information.

In a new RAT system including NR uses an OFDM transmission scheme or a similar transmission scheme thereto. The new RAT system may follow OFDM parameters different from OFDM parameters of LTE. Alternatively, the new RAT system may follow numerology of conventional LTE/LTE-A as it is or have a larger system bandwidth (e.g., 100 MHz). Alternatively, one cell may support a plurality of numerologies. In other words, UEs that operate with different numerologies may coexist in one cell.

The numerology corresponds to one subcarrier spacing in a frequency domain. Different numerologies may be defined by scaling reference subcarrier spacing to an integer N.

Definition of terms

eLTE eNB: The eLTE eNB is the evolution of eNB that supports connectivity to EPC and NGC.

gNB: A node which supports the NR as well as connectivity to NGC.

New RAN: A radio access network which supports either NR or E-UTRA or interfaces with the NGC.

Network slice: A network slice is a network created by the operator customized to provide an optimized solution for a specific market scenario which demands specific requirements with end-to-end scope.

Network function: A network function is a logical node within a network infrastructure that has well-defined external interfaces and well-defined functional behavior.

NG-C: A control plane interface used on NG2 reference points between new RAN and NGC.

NG-U: A user plane interface used on NG3 references points between new RAN and NGC.

Non-standalone NR: A deployment configuration where the gNB requires an LTE eNB as an anchor for control plane connectivity to EPC, or requires an eLTE eNB as an anchor for control plane connectivity to NGC.

Non-standalone E-UTRA: A deployment configuration where the eLTE eNB requires a gNB as an anchor for control plane connectivity to NGC.

User plane gateway: A termination point of NG-U interface.

Overview of system

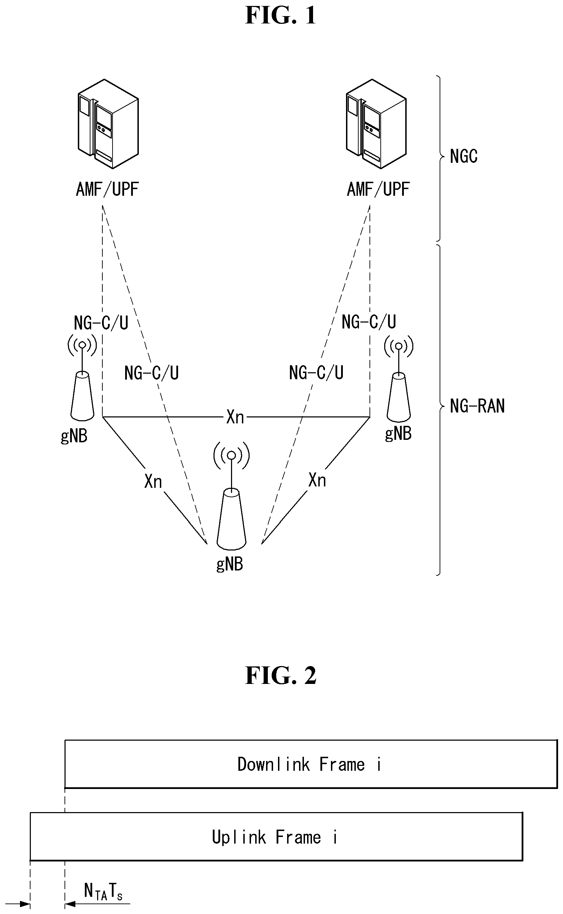

FIG. 1 illustrates an example of an overall structure of a NR system to which a method proposed in the disclosure is applicable..

Referring to FIG. 1, an NG-RAN consists of gNBs that provide an NG-RA user plane (new AS sublayer/PDCP/RLC/MAC/PHY) and control plane (RRC) protocol terminations for a user equipment (UE).

The gNBs are interconnected with each other by means of an Xn interface.

The gNBs are also connected to an NGC by means of an NG interface.

More specifically, the gNBs are connected to an access and mobility management function (AMF) by means of an N2 interface and to a user plane function (UPF) by means of an N3 interface.

NR(New Rat) Numerology and frame structure

In the NR system, multiple numerologies may be supported. The numerologies may be defined by subcarrier spacing and a CP (Cyclic Prefix) overhead. Spacing between the plurality of subcarriers may be derived by scaling basic subcarrier spacing into an integer N (or $\mu$). In addition, although a very low subcarrier spacing is assumed not to be used at a very high subcarrier frequency, a numerology to be used may be selected independent of a frequency band.

In addition, in the NR system, a variety of frame structures according to the multiple numerologies may be supported.

Hereinafter, an orthogonal frequency division multiplexing (OFDM) numerology and a frame structure, which may be considered in the NR system, will be described.

A plurality of OFDM numerologies supported in the NR system may be defined as in Table 1.

[Table 1]

| $\mu$ | $\Delta f = 2^{\mu} \cdot 15 \, [\text{kHz}]$ | Cyclic prefix |
|---|---|---|
| 0 | 15 | Normal |

(continued)

| $\mu$ | $\Delta f = 2^{\mu} \cdot 15\,[\text{kHz}]$ | Cyclic prefix |
|---|---|---|
| 1 | 30 | Normal |
| 2 | 60 | Normal, Extended |
| 3 | 120 | Normal |
| 4 | 240 | Normal |

The NR supports multiple numerologies (or subcarrier spacing (SCS)) for supporting various 5G services. For example, when the SCS is 15 kHz, a wide area in traditional cellular bands is supported and when the SCS is 30 kHz/60 kHz, dense-urban, lower latency, and wider carrier bandwidth are supported, and when the SCS is more than 60 kHz, a bandwidth larger than 24.25 GHz is supported in order to overcome phase noise.

An NR frequency band is defined as frequency ranges of two types (FR1 and FR2). FR1 and FR2 may be configured as shown in Table 2 below. Further, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in the NR system, a size of various fields in the time domain is expressed as a multiple of a time unit of $T_s = 1/(\Delta f_{max} \cdot N_f)$. In this case, $\Delta f_{max} = 480 \cdot 10^3$, and $N_f = 4096$. DL and UL transmission is configured as a radio frame having a section of $T_f = (\Delta f_{max} N_f/100) \cdot T_s$ = 10ms. The radio frame is composed of ten subframes each having a section of $T_{sf} = (\Delta f_{max} N_f/1000) \cdot T_s$ = 1 ms. In this case, there may be a set of UL frames and a set of DL frames.

FIG. 2 illustrates a relation between an uplink frame and a downlink frame in a wireless communication system to which a method proposed in the disclosure is applicable.

As illustrated in FIG. 2, uplink frame number i for transmission from a user equipment (UE) shall start $T_{TA} = N_{TA} T_s$ before the start of a corresponding downlink frame at the corresponding UE.

Regarding the numerology $\mu$, slots are numbered in increasing order of $n_s^{\mu} \in \left\{0,..., N_{subframe}^{slots,\,\mu} - 1\right\}$ within a subframe and are numbered in increasing order of $n_{s,f}^{\mu} \in \left\{0,..., N_{frame}^{slots,\mu} -1\right\}$ within a radio frame. One slot consists of consecutive OFDM symbols of $N_{symb}^{\mu}$, and $N_{symb}^{\mu}$ is determined depending on a numerology used and slot configuration. The start of slots $n_s^{\mu}$ in a subframe is aligned in time with the start of OFDM symbols $n_s^{\mu} N_{symb}^{\mu}$ in the same subframe.

Not all UEs are able to transmit and receive at the same time, and this means that not all OFDM symbols in a downlink slot or an uplink slot are available to be used.

Table 3 represents the number $N_{symb}^{slot}$ of OFDM symbols per slot, the number $N_{slot}^{frame,\,\mu}$ of slots per radio frame, and the number $N_{slot}^{subframe,\,\mu}$ of slots per subframe in a normal CP. Table 4 represents the number of OFDM symbols per slot, the number of slots per radio frame, and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |

(continued)

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 2 | 12 | 40 | 4 |

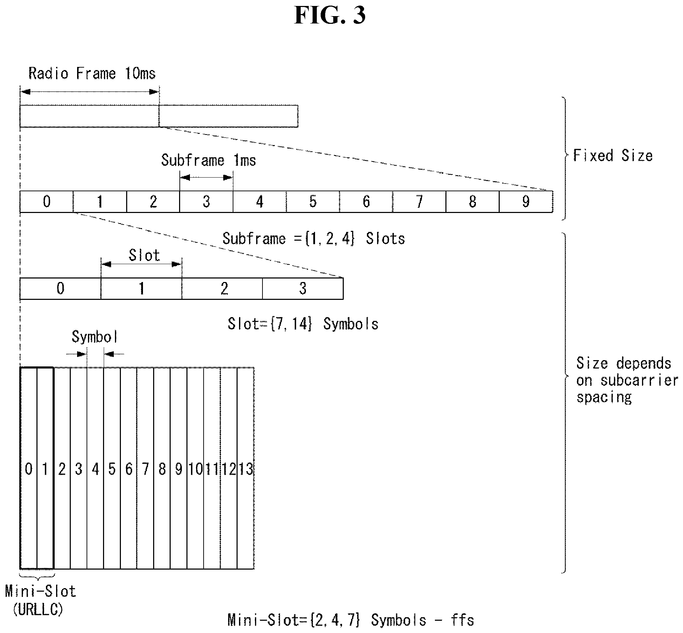

FIG. 3 illustrates an example of a frame structure in a NR system. FIG. 3 is merely for convenience of explanation and does not limit the scope of the disclosure.

In Table 4, in case of $\mu$=2, i.e., as an example in which a subcarrier spacing (SCS) is 60 kHz, one subframe (or frame) may include four slots with reference to Table 3, and one subframe = {1, 2, 4} slots shown in FIG. 3, for example, the number of slot(s) that may be included in one subframe may be defined as in Table 3.

Further, a mini-slot may consist of 2, 4, or 7 symbols, or may consist of more symbols or less symbols.

In regard to physical resources in the NR system, an antenna port, a resource grid, a resource element, a resource block, a carrier part, etc. May be considered.

Hereinafter, the above physical resources that may be considered in the NR system are described in more detail.

First, in regard to an antenna port, the antenna port is defined so that a channel over which a symbol on an antenna port is conveyed may be inferred from a channel over which another symbol on the same antenna port is conveyed. When large-scale properties of a channel over which a symbol on one antenna port is conveyed may be inferred from a channel over which a symbol on another antenna port is conveyed, the two antenna ports may be regarded as being in a quasi co-located or quasi co-location (QC/QCL) relation. Here, the large-scale properties may include at least one of delay spread, Doppler spread, frequency shift, average received power, and received timing.

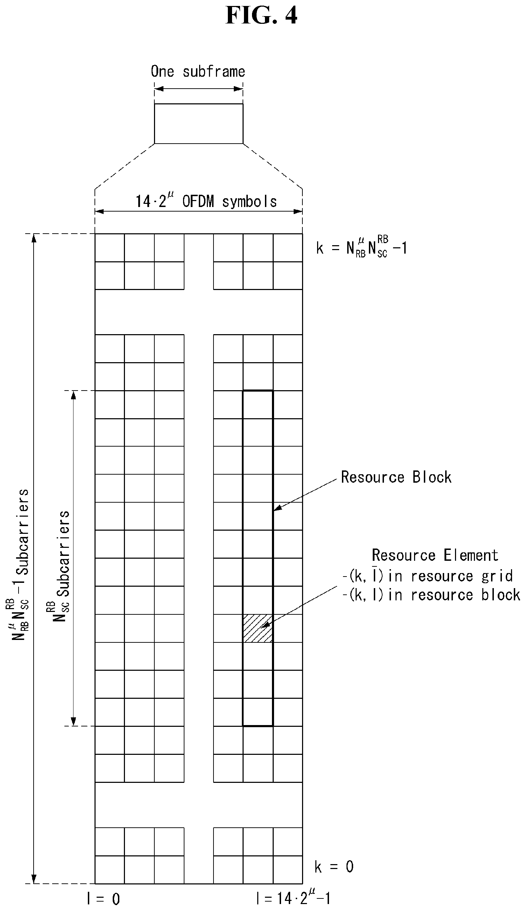

FIG. 4 illustrates an example of a resource grid supported in a wireless communication system to which a method proposed in the disclosure is applicable.

Referring to FIG. 4, a resource grid consists of $N_{\text{RB}}^{\mu} N_{\text{sc}}^{\text{RB}}$ subcarriers on a frequency domain, each subframe consisting of $14 \cdot 2\mu$ OFDM symbols, but the disclosure is not limited thereto.

In the NR system, a transmitted signal is described by one or more resource grids, consisting of $N_{\text{RB}}^{\mu} N_{\text{sc}}^{\text{RB}}$ subcarriers, and $2^{\mu} N_{\text{symb}}^{(\mu)}$ OFDM symbols, where $N_{\text{RB}}^{\mu} \leq N_{\text{RB}}^{\max,\mu}$. $N_{\text{RB}}^{\max,\mu}$ denotes a maximum transmission bandwidth and may change not only between numerologies but also between uplink and downlink.

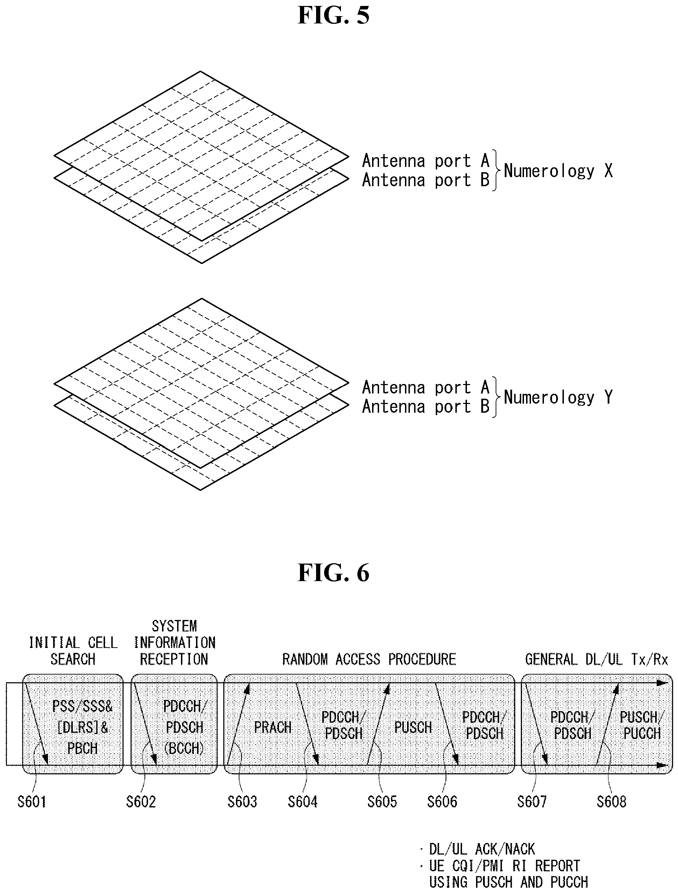

In this case, as illustrated in FIG. 5, one resource grid may be configured per numerology $\mu$ and antenna port p.

FIG. 5 illustrates examples of a resource grid per antenna port and numerology to which a method proposed in the disclosure is applicable.

Each element of the resource grid for the numerology $\mu$ and the antenna port p is called a resource element and is uniquely identified by an index pair $(k,\bar{l})$, where $k = 0,..., N_{\text{RB}}^{\mu} N_{\text{sc}}^{\text{RB}} - 1$ is an index on a frequency domain, and $\bar{l} = 0,..., 2^{\mu} N_{\text{symb}}^{(\mu)} - 1$ refers to a location of a symbol in a subframe. The index pair $(k,l)$ is used to refer to a resource element in a slot, where $l = 0,..., N_{\text{symb}}^{\mu} - 1$.

The resource element $(k,\bar{l})$ for the numerology $\mu$ and the antenna port p corresponds to a complex value $a_{k,\bar{l}}^{(p,\mu)}$. When there is no risk for confusion or when a specific antenna port or numerology is not specified, the indices p and

$\mu$ may be dropped, and as a result, the complex value may be $a_{k,\bar{l}}^{(p)}$ or $a_{k,\bar{l}}$.

Further, a physical resource block is defined as $N_{sc}^{RB} = 12$ consecutive subcarriers in the frequency domain.

Point A serves as a common reference point of a resource block grid and may be obtained as follows.

- offsetToPointA for PCell downlink represents a frequency offset between the point A and a lowest subcarrier of a lowest resource block that overlaps a SS/PBCH block used by the UE for initial cell selection, and is expressed in units of resource blocks assuming 15 kHz subcarrier spacing for FR1 and 60 kHz subcarrier spacing for FR2;
- absoluteFrequencyPointA represents frequency-location of the point A expressed as in absolute radio-frequency channel number (ARFCN);

The common resource blocks are numbered from 0 and upwards in the frequency domain for subcarrier spacing configuration $\mu$.

The center of subcarrier 0 of common resource block 0 for the subcarrier spacing configuration $\mu$ coincides with "point A". A common resource block number $n_{CRB}^{\mu}$ in the frequency domain and resource elements (k, l) for the subcarrier spacing configuration $\mu$ may be given by the following Equation 1.

[Equation 1]

$$n_{CRB}^{\mu} = \left\lfloor \frac{k}{N_{sc}^{RB}} \right\rfloor$$

Here, k may be defined relative to the point A so that k = 0 corresponds to a subcarrier centered around the point A. Physical resource blocks are defined within a bandwidth part (BWP) and are numbered from 0 to $N_{BWP,i}^{size} - 1$, where i is No. Of the BWP. A relation between the physical resource block $n_{PRB}$ in BWP i and the common resource block $n_{CRB}$ may be given by the following Equation 2.

[Equation 2]

$$n_{CRB} = n_{PRB} + N_{BWP,i}^{start}$$

Here, $N_{BWP,i}^{start}$ may be the common resource block where the BWP starts relative to the common resource block 0.

Physical Channel and General Signal Transmission

FIG. 6 illustrates physical channels and general signal transmission. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S601). To this end, the UE may receive a Primary Synchronization Signal (PSS) and a (Secondary Synchronization Signal (SSS) from the eNB and synchronize with the eNB and acquire information such as a cell ID or the like. Thereafter, the UE may receive a Physical Broadcast Channel (PBCH) from the eNB and acquire in-cell broadcast information. Meanwhile, the UE receives a Downlink Reference Signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S602).

Meanwhile, when there is no radio resource first accessing the eNB or for signal transmission, the UE may perform a Random Access Procedure (RACH) to the eNB (S603 to S606). To this end, the UE may transmit a specific sequence to a preamble through a Physical Random Access Channel (PRACH) (S603 and S605) and receive a response message (Random Access Response (RAR) message) for the preamble through the PDCCH and a corresponding PDSCH. In the case of a contention based RACH, a Contention Resolution Procedure may be additionally performed (S606).

The UE that performs the above procedure may then perform PDCCH/PDSCH reception (S607) and Physical Uplink Shared Channel (PUSCH)/Physical Uplink Control Channel (PUCCH) transmission (S608) as a general uplink/downlink signal transmission procedure. In particular, the UE may receive Downlink Control Information (DCI) through the PDCCH. Here, the DCI may include control information such as resource allocation information for the UE and formats may be differently applied according to a use purpose.

For example, in an NR system, DCI format 0_0 and DCI format 0_1 are used for scheduling of PUSCH in one cell, and DCI format 1_0 and DCI format 1_1 are used for scheduling PDSCH in one cell. Information included in DCI format 0_0 is CRC scrambled by C-RNTI or CS-RNTI or MCS-C-RNTI and transmitted. And, DCI format 0_1 is used for reserving PUSCH in one cell. Information included in DCI format 0_1 may be CRC scrambled by C-RNTI or CS-RNTI or SP-CSI-RNTI or MCS-C-RNTI and transmitted. DCI format 1_0 is used for scheduling PDSCH in one DL cell. Information included in DCI format 1_0 is CRC scrambled by C-RNTI or CS-RNTI or MCS-C-RNTI and transmitted. DCI format 1_1 is used for scheduling PDSCH in one cell. Information included in DCI format 1_1 is CRC scrambled by C-RNTI or CS-RNTI or MCS-C-RNTI and transmitted. DCI format 2_1 is used to inform PRB(s) and OFDM symbol(s) that the UE may assume that transmission is not intended. The following information included in DCI format 2_1 such as preemption indication 1, preemption indication 2, ..., preemption indication N is CRC scrambled by INT-RNTI and transmitted.

Meanwhile, the control information which the UE transmits to the eNB through the uplink or the UE receives from the eNB may include a downlink/uplink ACK/NACK signal, a Channel Quality Indicator (CQI), a Precoding Matrix Index (PMI), a Rank Indicator (RI), and the like. The UE may transmit the control information such as the CQI/PMI/RI, etc., through the PUSCH and/or PUCCH.

### DL and UL transmission/reception operation

<u>DL transmission/reception operation</u>

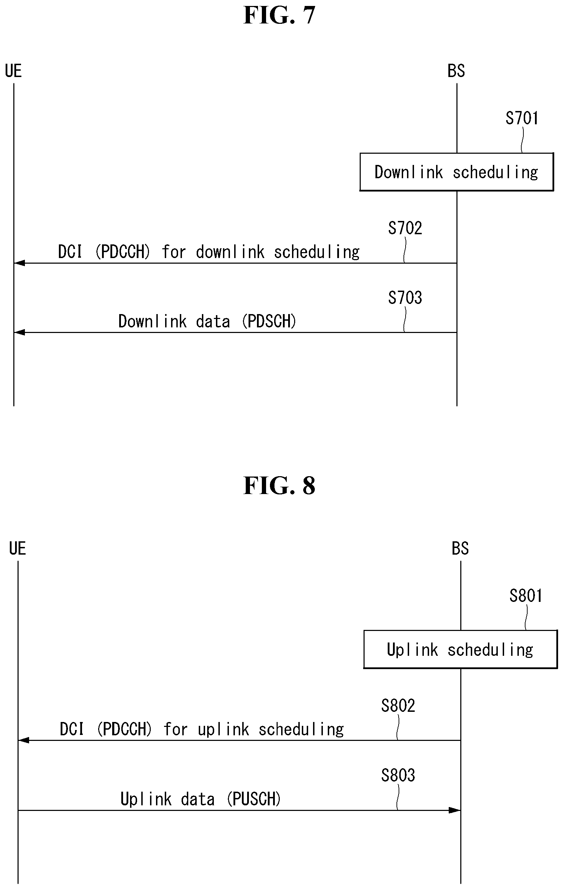

FIG. 7 illustrates an example of a downlink transmission and reception operation.

Referring to FIG. 7, the eNB may schedule downlink transmission such as the frequency/time resource, the transport layer, an downlink precoder, the MCS, etc., (S701). Specifically, the eNB may determine a beam for PDSCH transmission to the UE. In addition, the UE may receive Downlink Control Information (DCI) for downlink scheduling (i.e., including scheduling information of the PDSCH) on the PDCCH (S702). DCI format 1_0 or DCI format 1_1 may be used for the downlink scheduling and specifically, DCI format 1_1 may include information such as the following examples: Identifier for DCI formats, Bandwidth part indicator, Frequency domain resource assignment, Time domain resource assignment, PRB bundling size indicator, Rate matching indicator, ZP CSI-RS trigger, Antenna port(s), Transmission configuration indication (TCI), SRS request, and Demodulation Reference Signal (DMRS) sequence initialization.

In particular, according to each state indicated in an antenna port(s) field, the number of DMRS ports may be scheduled, and single-user (SU)/Multi-user (MU) transmission scheduling is also available. In addition, the TCI field consists of 3 bits, and the QCL for the DMRS may be dynamically indicated by indicating a maximum of 8 TCI states according to the TCI field value. The UE may receive downlink data from the base station on the PDSCH (S703). When the UE detects a PDCCH including DCI format 1_0 or 1_1, the UE may decode the PDSCH according to an indication by the corresponding DCI.

Here, when the UE receives a PDSCH scheduled by DCI format 1_1, a DMRS configuration type may be configured by higher layer parameter "dmrs-Type" in the UE and the DMRS type is used for receiving the PDSCH. Further, in the UE, the maximum number of front-loaded DMRS symbols for the PDSCH may be configured by higher layer parameter "maxLength."

In the case of DMRS configuration type 1, when a single codeword is scheduled and an antenna port mapped to an index of {2, 9, 10, 11, or 30} is designated in the UE or when two codewords are scheduled in the UE, the UE assumes that all remaining orthogonal antenna ports are not associated with PDSCH transmission to another UE. Alternatively, in the case of DMRS configuration type 2, when a single codeword is scheduled and an antenna port mapped to an index of {2, 10, or 23} is designated in the UE or when two codewords are scheduled in the UE, the UE assumes that all remaining orthogonal antenna ports are not related to PDSCH transmission to another UE.

When the UE receives the PDSCH, a precoding granularity P' may be assumed as a consecutive resource block in the frequency domain. Here, P' may correspond to one value of {2, 4, and wideband}. When P' is determined as wideband, the UE does not predict that the PDSCH is scheduled to non-contiguous PRBs and the UE may assume that the same precoding is applied to the allocated resource. On the contrary, when P' is determined as any one of {2 and 4}, a Precoding Resource Block (PRG) is split into P' consecutive PRBs. The number of actually consecutive PRBs in each PRG may be one or more. The UE may assume that the same precoding is applied to consecutive downlink PRBs in the PRG.

In order to determine a modulation order in the PDSCH, a target code rate, and a transport block size, the UE may first read a 5-bit MCD field in the DCI and determine the modulation order and the target code rate. In addition, the UE may read a redundancy version field in the DCI and determine a redundancy version. In addition, the UE may determine the transport block size by using the number of layers before rate matching and the total number of allocated PRBs.

A transport block may be made up of one or more code block groups (CBG), and one CBG may be made up of one or more code blocks (CB). Also, in an NR system, data transmission and reception may be performed for each CB/CBG as well as for each transport block. Accordingly, ACK/NACK transmission and retransmission per CB/CBG also may be possible. The UE may receive information on CB/CBG from the base station through a DCI (e.g., DCI format 0_1 and DCI format 1_1). Also, the UE may receive information on a data transmission unit (e.g., TB/CB/CBG) from the base station.

UL transmission/reception operation

FIG. 8 illustrates an example of an uplink transmission and reception operation. Referring to the FIG. 8, the eNB may schedule uplink transmission such as the frequency/time resource, the transport layer, an uplink precoder, the MCS, etc., (S801). In particular, the eNB may determine a beam for PUSCH transmission of the UE through the beam management operations described above. And, the UE may receive, from the eNB, DCI for uplink scheduling (i.e., including scheduling information of the PUSCH) on the PDCCH (S802).

DCI format 0_0 or 0_1 may be used for the uplink scheduling and in particular, DCI format 0_1 may include information such as the following examples: Identifier for DCI formats, UL/Supplementary uplink (SUL) indicator, Bandwidth part indicator, Frequency domain resource assignment, Time domain resource assignment, Frequency hopping flag, Modulation and coding scheme (MCS), SRS resource indicator (SRI), Precoding information and number of layers, Antenna port(s), SRS request, DMRS sequence initialization, and Uplink Shared Channel (UL-SCH) indicator.

In particular, configured SRS resources in an SRS resource set associated with higher layer parameter "usage" may be indicated by an SRS resource indicator field. Further, "spatialRelationInfo" may be configured for each SRS resource and a value of "spatialRelationInfo" may be one of {CRI, SSB, and SRI}.

In addition, the UE may transmit the uplink data to the eNB on the PUSCH (S803). When the UE detects a PDCCH including DCI format 0_0 or 0_1, the UE may transmit the corresponding PUSCH according to the indication by the corresponding DCI. two schemes(Codebook based transmission scheme and non-codebook based transmission scheme) are supported for PUSCH transmission.

In the case of the codebook based transmission, when higher layer parameter txConfig" is set to "codebook", the UE is configured to the codebook based transmission. On the contrary, when higher layer parameter txConfig" is set to "nonCodebook", the UE is configured to the non-codebook based transmission. When higher layer parameter "txConfig" is not configured, the UE does not predict that the PUSCH is scheduled by DCI format 0_1. When the PUSCH is scheduled by DCI format 0_0, the PUSCH transmission is based on a single antenna port. In the case of the codebook based transmission, the PUSCH may be scheduled by DCI format 0_0, DCI format 0_1, or semi-statically. When the PUSCH is scheduled by DCI format 0_1, the UE determines a PUSCH transmission precoder based on the SRI, the Transmit Precoding Matrix Indicator (TPMI), and the transmission rank from the DCI as given by the SRS resource indicator and the Precoding information and number of layers field. The TPMI is used for indicating a precoder to be applied over the antenna port and when multiple SRS resources are configured, the TPMI corresponds to the SRS resource selected by the SRI. Alternatively, when the single SRS resource is configured, the TPMI is used for indicating the precoder to be applied over the antenna port and corresponds to the corresponding single SRS resource. A transmission precoder is selected from an uplink codebook having the same antenna port number as higher layer parameter "nrofSRS-Ports". When the UE is set to higher layer parameter "txConfig" set to "codebook", at least one SRS resource is configured in the UE. An SRI indicated in slot n is associated with most recent transmission of the SRS resource identified by the SRI and here, the SRS resource precedes PDCCH (i.e., slot n) carrying the SRI.

In the case of the non-codebook based transmission, the PUSCH may be scheduled by DCI format 0_0, DCI format 0_1, or semi-statically. When multiple SRS resources are configured, the UE may determine the PUSCH precoder and the transmission rank based on a wideband SRI and here, the SRI is given by the SRS resource indicator in the DCI or given by higher layer parameter "srs-ResourceIndicator". The UE may use one or multiple SRS resources for SRS transmission and here, the number of SRS resources may be configured for simultaneous transmission in the same RB based on the UE capability. Only one SRS port is configured for each SRS resource. Only one SRS resource may be configured to higher layer parameter "usage" set to "nonCodebook". The maximum number of SRS resources which may be configured for non-codebook based uplink transmission is 4. The SRI indicated in slot n is associated with most recent transmission of the SRS resource identified by the SRI and here, the SRS transmission precedes PDCCH (i.e., slot n) carrying the SRI.

Beam-related indication

A UE may be RRC configured with a list of up to M candidate Transmission Configuration Indication (TCI) states at least for the purposes of QCL (Quasi Co-location) indication. Here, M may be 64.
Each TCI state may be configured in one RS set. IDs of each DL RS for the purpose of spatial QCL (QCL Type D) at least in the RS set may refer to one of DL RS types such as SSB, P-CSI RS, SP-CSI RS, and A-CSI RS.
Initialization/update for the ID of DL RS(s) in the RS set that are used at least for the purpose of spatial QCL may be performed at least by explicit signaling.
Table 5 shows an example of TCI-State IE.
The TCI-State IE associates one or two DL reference signals (RS) with a corresponding quasi co-location (QCL) type.

[Table 5]

```
-- ASN1START
-- TAG-TCI-STATE-START

TCI-State ::=                    SEQUENCE {
    tci-StateId                     TCI-StateId,
    qcl-Type1                       QCL-Info,
    qcl-Type2                       QCL-Info
    ...
}

QCL-Info ::=                     SEQUENCE {
    cell                            ServCellIndex
    bwp-Id                          BWP-Id
    referenceSignal                 CHOICE {
        csi-rs                          NZP-CSI-RS-ResourceId,
        ssb                             SSB-Index
    },
    qcl-Type                        ENUMERATED {typeA, typeB, typeC, typeD},
```

```
    ...
}

-- TAG-TCI-STATE-STOP
-- ASN1STOP
```

In Table 5, a bwp-Id parameter indicates DL BWP where RS is positioned, a cell parameter indicates a carrier where RS is positioned, a reference signal parameter indicates a reference antenna port(s) that is a source of quasi co-location for a corresponding target antenna port(s), or a reference signal including it. The target antenna port(s) may be CSI-RS, PDCCH DMRS, or PDSCH DMRS. For example, a corresponding TCI state ID may be indicated to NZP CSI-RS resource configuration information to indicate QCL reference RS information for NZP CSI-RS. As another example, a TCI state ID may be indicated in each CORESET configuration to indicate QCL reference information for the PDCCH DMRS antenna port(s). As another example, a TCI state ID may be indicated through DCI to indicate QCL reference information for the PDSCH DMRS antenna port(s).

Quasi-Co Location (OCL)

The antenna port is defined so that a channel over which a symbol on an antenna port is conveyed may be inferred from a channel over which another symbol on the same antenna port is conveyed. When properties of a channel over which a symbol on one antenna port is conveyed may be inferred from a channel over which a symbol on another antenna port is conveyed, the two antenna ports may be considered as being in a quasi co-located or quasi co-location (QC/QCL) relationship.

The channel properties include one or more of delay spread, Doppler spread, frequency/Doppler shift, average received power, received timing/average delay, and spatial RX parameter. The spatial Rx parameter means a spatial (reception) channel property parameter such as an angle of arrival.

The UE may be configured with a list of up to M TCI-State configurations within the higher layer parameter PDSCH-Config to decode PDSCH according to a detected PDCCH with DCI intended for the corresponding UE and a given serving cell, where M depends on UE capability.

Each TCI-State contains parameters for configuring a quasi co-location relationship between one or two DL reference signals and the DM-RS ports of the PDSCH.

The quasi co-location relationship is configured by the higher layer parameter qcl-Type1 for the first DL RS and qcl-Type2 for the second DL RS (if configured). For the case of two DL RSs, the QCL types are not be the same, regardless of whether the references are to the same DL RS or different DL RSs.

The quasi co-location types corresponding to each DL RS are given by the higher layer parameter qcl-Type of QCL-Info and may take one of the following values:

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD' : {Spatial Rx parameter}

For example, if a target antenna port is a specific NZP CSI-RS, the corresponding NZP CSI-RS antenna ports may be indicated/configured to be QCLed with a specific TRS in terms of QCL-TypeA and with a specific SSB in terms of QCL-TypeD. The UE receiving the indication/configuration may receive the corresponding NZP CSI-RS using the Doppler or delay value measured in the QCL-TypeA TRS and apply the Rx beam used for QCL-TypeD SSB reception to the reception of the corresponding NZP CSI-RS reception.

The UE may receive an activation command by MAC CE signaling used to map up to eight TCI states to the codepoint of the DCI field 'Transmission Configuration Indication'.

The descriptions (e.g., 3GPP system, frame structure, DL and UL transmission and reception, etc.) given above may be applied/used in combination with methods and/or embodiments proposed in the present disclosure or may be supplemented to clarify technical features of the methods proposed in the present disclosure. In the present disclosure, the presence of a slash "/" may indicate that all or only some of words or phrases separated by / are included.

Multiple Transmission and Reception point (TRP)-related operation

The coordinated multi point (CoMP) technique is a scheme in a plurality of base stations exchange (e.g., use X2 interface) or utilize channel information (e.g., RI/CQI/PMI/LI, etc.) fed back from the user equipment (UE) to perform cooperative transmission with the UE, thereby effectively controlling interference. According to the scheme used, the cooperative transmission may be divided into joint transmission (JT), coordinated scheduling (CS), coordinated beamforming (CB), dynamic point selection (DPS), dynamic point blacking (DPB), and the like.

Non-coherent joint transmission (NCJT) may refer to cooperative transmission that does not consider interference (that is, with no interference). For example, the NCJT may be a scheme in which a base station(s) transmits data to one UE through multiple TRPs by using the same time resource and frequency resource. In this scheme, the multiple TRPs of the base station(s) may be configured to transmit data to UE through different layers by using different demodulation reference signal (DMRS) ports. In other words, the NCJT may correspond to a transmission scheme in which transmission of a MIMO layer(s) from two or more TRPs is performed without adaptive precoding between the TRPs.

The NCJT may be categorized into fully overlapped NCJT, in which time and frequency resources used for transmission by each base station (or TRP) are fully overlapped, and partially overlapped NCJT, in which time and frequency resources used for transmission by each base station (or TRP) are partially overlapped. This is only for convenience of explanation in the present disclosure, and it is needless to say that, in the embodiments and methods to be described below, the above-mentioned terms can be replaced with other terms with the same technical meanings. For example, in the case of partially overlapped NCJT, both data of a first base station (e.g., TRP 1) and data of a second base station (e.g., TRP 2) may be transmitted in some of the time resources and/or frequency resources, and data of only one of the first and second base stations may be transmitted in the remaining time resources and/or frequency resources.

TRP transmits data scheduling information to an NCJT receiving UE as DCI (Downlink Control Information). From the perspective of downlink control information (DCI) transmission, M-TRP (multiple TRP) transmission may be divided into i) M-DCI (multiple DCI) based M-TRP transmission in which each TRP transmits a different DCI and ii) S-DCI (single DCI) based M-TRP transmission in which one TRP transmits DCI.

Firstly, the single DCI based MTRP scheme will be described. In the single DCI based MTRP scheme in which a representative TRP transmits scheduling information for data transmitted by itself and data transmitted by another TRP through one DCI, MTRPs cooperatively transmit one common PDSCH and each TRP participating in the cooperative transmission spatially divides the corresponding PDSCH into different layers (i.e., different DMRS ports). In other words, MTRPs transmit one PDSCH but each TRP transmits only some of multiple layers of the PDSCH. For example, when 4-layer data is transmitted, TRP 1 transmits 2 layers, and TRP 2 transmits the remaining 2 layers to the UE.

In this case, scheduling information for the PDSCH is indicated to the UE through one DCI, and the corresponding DCI indicates which DMRS port uses information of which QCL RS and QCL type (which is different from conventionally indicating the QCL RS and TYPE that are commonly applied to all DMRS ports indicated by the DCI). That is, M TCI states (M=2 for 2 TRP cooperative transmission) are indicated through the TCI field in the DCI, and the QCL RS and type are identified by using M TCI states which are different for M DMRS port groups. Also, DMRS port information may be indicated by using a new DMRS table.

As an example, in the case of the S-DCI, since all scheduling information for data transmitted by M TRPs should be delivered through one DCI, the S-DCI may be used in an ideal backhaul (BH) environment in which two TRPs may be dynamically coordinated with each other.

Secondly, the multiple DCI based MTRP method will be described. MTRPs transmit different DCIs and PDSCHs, respectively (the UE receives N DCIs and N PDSCHs from N TRPs), and the corresponding PDSCHs are transmitted by (partially or wholly) overlapping on different time resources. The corresponding PDSCHs are transmitted through different scrambling IDs, and the corresponding DCIs may be transmitted through Coresets belonging to different Coreset groups (A coreset group may be identified as an index defined in the coreset configuration of each Coreset. For example, if Coresets 1 and 2 are set to index = 0 and Coresets 3 and 4 are set to index =1, Coresets 1 and 2 belong to Coreset group 0 and Coresets 3 and 4 belong to Coreset group 1. If no index is defined for a coreset, this may be interpreted as index = 0). If multiple scrambling IDs are set in one serving cell or two or more coreset groups are set, the UE may know that data is received by multiple DCI-based MTRP operation.

For example, the single DCI based MTRP scheme or the multiple DCI based MTRP scheme may be indicated to the UE through separate signaling. As an example, when a plurality of CRS patterns are indicated to the UE for MTRP operation for one serving cell, PDSCH rate matching for CRS may be different depending on this MTRP operation is a single DCI based MTRP operation or a multiple DCI based MTRP operation.

The base station described in this disclosure may be a generic term for an object that transmits/receives data to and from UE. For example, the base station described herein may be a concept including one or more transmission points (TPs), one or more transmission and reception points (TRPs), and the like. For example, multiple TPs and/or multiple TRPs described herein may be included in one base station or included in multiple base stations. In addition, the TP and/or TRP may include a panel of a base station, a transmission and reception unit, and the like.

In addition, the TRP described in this disclosure means an antenna array having one or more antenna elements available in a network located at a specific geographical location in a specific area. Although this disclosure is described with respect to "TRP" for convenience of explanation, the TRP may be replaced with a base station, a transmission point (TP), a cell (e.g., a macro cell/small cell/pico cell, etc.), an antenna array, or a panel and understood and applied as such.

In addition, the CORESET group ID described in this disclosure may refer to an index/ identification information (e.g., ID)/indicator, etc. for distinguishing a CORESET configured for/associated with each TRP/panel (or for each TRP/panel). In addition, the CORESET group may be a group/union of CORESETs which is distinguished by the index/identification information (e.g., ID) for distinguishing the CORESET and the CORESET group ID. For example, the CORESET group ID may be specific index information defined in the CORESET configuration. For example, the CORESET group may be configured/indicated/defined by an index defined in the CORESET configuration for each CORESET. The CORESET group ID may be configured/indicated through higher layer signaling (e.g., RRC signaling)/L2 signaling (e.g., MAC-CE)/L1 signaling (e.g., DCI).

For example, ControlResourceSet information element (IE) which is a higher layer parameter is used for configuring a time/frequency control resource set (CORESET). As an example, the control resource set may be related to detection and reception of downlink control information. The ControlResourceSet information element may include ID (e.g., controlResourceSetID) related to the CORESET, an index (e.g., CORESETPoolIndex) of a CORESET pool for the CORESET, a time/frequency resource configuration of the CORESET, TCI information related to the CORESET, etc. As an example, the index (e.g., CORESETPoolIndex) of the CORESET pool may be configured to 0 or 1. The index of CORESET Pool may mean CORESET group ID. As an example, the index (e.g., CORESETPoolIndex) of the CORESET pool may correspond to the CORESET group ID.

M-TRP transmission

M-TRP transmission by which multiple (e.g., M) TRPs transmit data to one user equipment (UE) may be divided into two main types of transmission: eMBB M-TRP transmission (or M-TRP eMMB) which is a scheme for increasing a transmission rate and URLLC M-TRP transmission (or M-TRP URLLC) which is a scheme for increasing a reception success rate and reducing latency.

URLLC M-TRP may mean that M-TRPs transmit the same TB (Transport Block) using different resources (e.g., layers/time resources/frequency resources, etc.). A number of TCI state(s) may be indicated by DCI to a UE configured with the URLLC M-TRP transmission scheme, and data received using the QCL reference signal (RS) of each TCI state may be assumed to be the same TB. On the other hand, eMBB M-TRP may mean that M-TRPs transmit different TBs using different resources (e.g., layers/time resources/frequency resources, etc.). A number of TCI state(s) may be indicated by DCI to a UE configured with the eMBB M-TRP transmission scheme, and data received using the QCL RS of each TCI state may be assumed to be different TBs.

For example, the UE may decide/determine whether the corresponding M-TRP transmission is URLLC transmission or eMBB transmission since it uses the RNTI configured for MTRP-URLLC and the RNTI configured for MTRP-eMBB, separately. That is, if the CRC masking of the DCI received by the UE is performed using the RNTI configured for the MTRP-URLLC purpose, this may correspond to URLLC transmission, and if the CRC masking of the DCI is performed using the RNTI configured for the MTRP-eMBB purpose, this may correspond to eMBB transmission.

Table 6 shows various schemes that can be considered for URLLC M-TRP transmission. Referring to Table 6, there exist various schemes such as SDM/FDM/TDM.

[Table 6]

| To facilitate further down-selection for one or more schemes in RAN1#96bis, schemes for multi-TRP based URLLC, scheduled by single DCI at least, are clarified as following: |
| --- |
| • Scheme 1 (SDM): n (n<=$N_s$) TCI states within the single slot, with overlapped time and frequency resource allocation |
| ▪ Scheme 1a: |
| • Each transmission occasion is a layer or a set of layers of the same TB, with each layer or layer set is associated with one TCI and one set of DMRS port(s). |
| • Single codeword with one RV is used across all spatial layers or layer sets. From the UE perspective, different coded bits are mapped to different layers or layer sets with the same mapping rule as in Re1-15. |
| ▪ Scheme 1b: |
| • Each transmission occasion is a layer or a set of layers of the same TB, with each layer or layer set is associated with one TCI and one set of DMRS port(s). |
| • Single codeword with one RV is used for each spatial layer or layer set. The RVs corresponding to each spatial layer or layer set can be the same or different. |
| ▪ Scheme 1c: |
| • One transmission occasion is one layer of the same TB with one DMRS port associated with multiple TCI state indices, or one layer of the same TB with multiple DMRS ports associated with multiple TCI state indices one by one. |
| ▪ For Scheme 1a and ic, the same MCS is applied for all layers or layer sets. |
| ▪ For scheme 1b, same or different MCS/modulation orders for different layers or layer sets can be discussed. |
| • Scheme 2 (FDM): n (n<=$N_f$) TCI states within the single slot, with non-overlapped frequency resource allocation |

(continued)

| | |
|---|---|
| | ▪ Each non-overlapped frequency resource allocation is associated with one TCI state.<br>▪ Same single/multiple DMRS port(s) are associated with all non-overlapped frequency resource allocations.<br>　▪ Scheme 2a:<br>　• Single codeword with one RV is used across full resource allocation. From UE perspective, the common RB mapping (codeword to layer mapping) is applied across full resource allocation.<br>　▪ Scheme 2b:<br>　• Single codeword with one RV is used for each non-overlapped frequency resource allocation. The RVs corresponding to each non-overlapped frequency resource allocation can be the same or different.<br>▪ For scheme 2a, same MCS is applied for all non-overlapped frequency resource allocations<br>▪ For scheme 2b, same or different MCS/modulation orders for different non-overlapped frequency resource allocations can be discussed.<br>▪ Details of frequency resource allocation mechanism for FDM 2a/2b with regarding to allocation granularity, time domain allocation can be discussed.<br>• Scheme 3 (TDM): n (n<=$N_{t1}$) TCI states within the single slot, with non-overlapped time resource allocation<br>　◦ Each transmission occasion of the TB has one TCI and one RV with the time granularity of mini-slot.<br>　◦ All transmission occasion (s) within the slot use a common MCS with same single or multiple DMRS port(s),<br>　◦ RVITCI state can be same or different among transmission occasions.<br>　◦ FFS channel estimation interpolation across mini-slots with the same TCI index<br>• Scheme 4 (TDM): n (n<=$N_{t2}$) TCI states with K (n<=K) different slots.<br>　◦ Each transmission occasion of the TB has one TCI and one RV.<br>　◦ All transmission occasion (s) across K slots use a common MCS with same single or multiple DMRS port(s)<br>　◦ RVITCI state can be same or different among transmission occasions.<br>　◦ FFS channel estimation interpolation across slots with the same TCI index |
| Note that M-TRP/panel based URLLC schemes shall be compared in terms of improved reliability, efficiency, and specification impact.<br>Note: Support of number of layers per TRP may be discussed | |

For example, in relation to the TDM based URLLC scheme, scheme 4 refers to a scheme in which one TRP transmits a TB in one slot, which may increase the probability of data reception through the same TB received from a number of TRPs in a number of slots. Scheme 3 refers to a scheme in which one TRP transmits a TB thorough several consecutive OFDM symbols (i.e., a symbol group), by which a number of TRPs may be configured to transmit the same TB through different symbol groups within one slot.

Method for improving reliability in Multi-TRPs

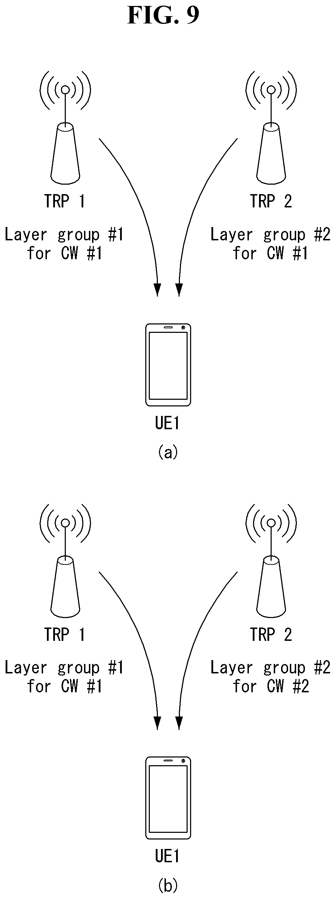

FIG. 9 illustrates an example of a transmission/reception method for improving reliability supported by a plurality of TRPs, and the following two methods may be considered.

The example in (a) of FIG. 9 shows that a layer group transmitting the same codeword (CW)/transport block (TB) correspond to different TRPs. That is, the same CW may be transmitted through different layers/layer groups. In this case, a layer group may refer to some kind of layer set made up of one or more layers. As such, the amount of transmission resources increases as the number of layers increases, and this is advantageous in that robust channel coding with a low code rate can be used for TB. In addition, it is expected that the reliability of received signals may be improved based on diversity gain due to different channels from a plurality of TRPs.

Meanwhile, the example in (b) of FIG. 9 shows an example in which different CWs are transmitted through layer groups corresponding to different TRPs. That is, different CWs may be transmitted through different layers/layer groups. In this case, it may be assumed that TBs corresponding to the first CW (CW #1) and the second CW (CW #2) are the same. Therefore, this can be seen as an example of repeated transmission of the same TB. In the case of (b) of FIG. 9, the code rate corresponding to the TB may be higher than that of (a) of FIG 9. Still, there is an advantage that a code rate can be adjusted by indicating different redundancy version (RV) values for encoding bits generated from the same TB according to a channel environment, or that a modulation order of each CW may be adjusted.

In (a) of FIG. 9 or (b) of FIG. 9, the same TB is repeatedly transmitted through different layer groups, and each layer group is transmitted by different TRPs/panels, thereby increasing the data reception probability, which may be called spatial division multiplexing (SDM)-based URLLC M-TRP transmission. A layer(s) belonging to different layer groups are transmitted through DMRS ports belonging to different DMRS CDM groups, respectively.

In addition, although the above description regarding multiple TRPs has been given with respect to a spatial division multiplexing (SDM) scheme using different layers, it also may be extensively applied to a frequency division multiplexing (FDM) scheme based on different frequency domain resources (e.g., RB/PRB (set)), and/or a time division multiplexing (TDM) scheme based on different time domain resources (e.g., slots, symbols, and sub-symbols).

Hereinafter, matters related to Rel-17 MTRP URLLC will be described.

In methods described below in the present disclosure, DL MTRP-URLLC means that multiple TRPs each transmit the same data/DCI using a different layer/time/frequency resource. For example, TRP 1 transmits the same data/DCI in resource 1, and TRP 2 transmits the same data/DCI in resource 2. A UE configured with a DL MTRP-URLLC transmission scheme receives the same data/DCI using different layer/time/frequency resources. In this instance, the base station indicates, to the UE, which QCL RS/type (i.e., DL TCI state) is used in the layer/time/frequency resources receiving the same data/DCI. For example, when the same data/DCI is received in resource 1 and resource 2, a DL TCI state used in the resource 1 and a DL TCI state used in the resource 2 are indicated to the UE. Since the UE receives the same data/DCI through the resource 1 and the resource 2, high reliability can be achieved. This DL MTRP URLLC may be applied to PDSCH/PDCCH as an object.

On the contrary, UL MTRP-URLLC means that multiple TRPs each receive the same data/DCI from a UE using a different layer/time/frequency resource. For example, after TRP 1 receives the same data/DCI from the UE in resource 1 and TRP 2 receives the same data/DCI from the UE in resource 2, the received data/DCI is shared through a backhaul link connected between the TRPs. The UE configured with an UL MTRP-URLLC transmission scheme transmits the same data/LTCI using different layer/time/frequency resources. In this instance, the base station indicates, to the UE, which Tx beam and which Tx power (i.e., UL TCI state) are used in the layer/time/frequency resources transmitting the same data/LTCI. For example, when the same data/UCI is transmitted in resource 1 and resource 2, a UL TCI state used in the resource 1 and a UL TCI state used in the resource 2 are indicated to the UE. This UL MTRP URLLC may be applied to PUSCH/PUCCH as an object.

In methods described below in the present disclosure, the meaning of using (or mapping) a specific TCI state (or TCI) when receiving data/DCI/UCI for a certain frequency/time/space resource is as follows. For DL, it may mean that the UE estimates a channel from a DMRS using a QCL type and QCL RS indicated by the TCI state in the frequency/time/space resource and receives/demodulates data/DCI based on the estimated channel. For UL, it may mean that the UE transmits/modulates DMRS and data/LTCI using a Tx beam and/or Tx power indicated by the corresponding TCI state in the frequency/time/space resource.

The UL TCI state may contain Tx beam and/or Tx power information of the UE, and the UE may be configured with spatial relation info, etc. instead of the TCI state through other parameters. The UL TCI state may be directly indicated to UL grant DCI, or may mean spatial relation info of an SRS resource indicated through an SRI field of the UL grant DCI. Alternatively, the UL TCI state may mean an OL Tx power control parameter (j: index for open loop parameters Po & alpha (maximum 32 parameter value sets per cell), q_d: index of DL RS resource for PL measurement (maximum 4 measurements per cell), l: closed loop power control process index (maximum 2 processes per cell)) connected to a value indicated through the SRI field of the UL grant DCI.

On the other hand, MTRP-eMBB means that multiple TRPs transmit different data using different layer/time/frequency. It is assumed that a UE configured with the MTRP-eMBB transmission scheme is indicated several TCI states via DCI, and data received using QCL RS of each TCI state are different data.

In addition, whether the MTRP URLLC transmission/reception or the MTRP eMBB transmission/reception is performed may be determined by the UE by separately using an RNTI for MTRP-URLLC and an RNTI for MTRP-eMBB. That is, when CRC masking of DCI is performed using the RNTI for URLLC, the UE determines it as the URLLC transmission, and when CRC masking of DCI is performed using the RNTI for eMBB, the UE determines it as the eMBB transmission. Alternatively, the base station may configure the MTRP URLLC transmission/reception or the MTRP eMBB transmission/reception to the UE via other new signaling.

For convenience of description, the present disclosure has applied proposal methods by assuming cooperative transmission/reception between 2 TRPs, but can be extended and applied even in three or more multi-TRP environments. The present disclosure can also be extended and applied to a multi-panel environment. Different TRPs may be recognized by the UE as different TCI states. Receiving/transmitting, by the UE, data/DCI/UCI using TCI state 1 means that the UE receives/transmits data/DCI/UCI from/to TRP 1.

Proposals of the present disclosure may be utilized in a situation where MTRP cooperatively transmits a PDCCH (repetitively transmits or dividedly transmits the same PDCCH), and some proposals may be also utilized in a situation where MTRP cooperatively transmits PDSCH or cooperatively receives PUSCH/PUCCH.

In the present disclosure, the fact that a plurality of base stations (i.e., MTRPs) repetitively transmit the same PDCCH may mean that the same DCI has been transmitted through multiple PDCCH candidates, and is the same as the meaning that the plurality of base stations repetitively transmit the same DCI. The same DCI may mean two DCIs with the same DCI format/size/payload. Alternatively, although two DCIs have different payloads, they may be considered the same DCI when a scheduling result is the same. For example, a time domain resource allocation (TDRA) field of DCI may relatively determine a slot/symbol location of ACK/NACK and a slot/symbol location of data based on a reception occasion of DCI. Here, if DCI received at an occasion 'n' and DCI received at an occasion (n+1) inform UE of the same scheduling result, TDRA fields of two DCIs are different and consequently, DCI payloads are inevitably different. The number of repetitions R may be directly indicated by the base station to the UE or mutually promised between them. Alternatively, even if two DCIs have different payloads and different scheduling results, they may be considered the same DCI when a scheduling result of one DCI is a subset of a scheduling result of the other DCI. For example, when the same data is TDMed and is repetitively transmitted N times, DCI 1 received before first data indicates N data repetitions, and DCI 2 received after the first data and before second data indicates N-1 data repetitions. Scheduling data of the DCI 2 is a subset of scheduling data of the DCI 1, and all the two DCIs are scheduling for the same data. Therefore, in this case, they may be considered the same DCI.

In addition, in the present disclosure, the fact that a plurality of base stations (i.e., MTRPs) dividedly transmit the same PDCCH may mean that one DCI is transmitted through one PDCCH candidate, but TRP 1 transmits some resources, in which the PDCCH candidate is defined, and TRP 2 transmits remaining resources. For example, when TRP 1 and TRP 2 dividedly transmit a PDCCH candidate corresponding to aggregation level m1+m2, the PDCCH candidate is divided into PDCCH candidate 1 corresponding to aggregation level m1 and PDCCH candidate 2 corresponding to aggregation level m2. And, the TRP 1 transmits the PDCCH candidate 1 and the TRP 2 transmits the PDCCH candidate 2 to different time/frequency resources. After the UE receives the PDCCH candidate 1 and the PDCCH candidate 2, the UE generates the PDCCH candidate corresponding to the aggregation level m1+m2 and tries DCI decoding.

When the same DCI is dividedly transmitted to multiple PDCCH candidates, there may be two implementation methods.

First, there is a method in which a DCI payload (control information bits + CRC) is encoded through one channel encoder (e.g., polar encoder) and coded bits obtained thereby are dividedly transmitted by two TRPs. In this case, for coded bits transmitted by each TRP, all DCI payloads may be encoded or only some DCI payloads may be encoded. Second, there is a method in which a DCI payload (control information bits + CRC) is divided into two (DCI 1 and DCI 2) and is encoded through each channel encoder (e.g., polar encoder). Subsequently, two TRPs transmit coded bits corresponding to DCI 1 and coded bits corresponding to DCI 2, respectively.

In summary, the fact that a plurality of base stations (MTRPs) dividedly/repetitively transmit the same PDCCH across a plurality of transmission occasions (TOs) may mean one of the following 1) to 3):

1) each base station (i.e., STRP) repetitively transmits coded DCI bits encoding all DCI contents of a corresponding PDCCH through each monitoring occasion (MO), or
2) each base station (i.e., STRP) divides coded DCI bits encoding all DCI contents of a corresponding PDCCH into a plurality of parts and transmits a different part through each MO, or
3) each base station (i.e., STRP) divides DCI contents of a corresponding PDCCH into a plurality of parts and separately encodes and transmits a different part through each MO.

It can be understood that the PDCCH is transmitted multiple times across multiple transmission occasions (TOs) regardless of the repetition transmission or the division transmission of the PDCCH. The TO refers to a specific time/frequency resource unit in which the PDCCH is transmitted. For example, if the PDCCH is transmitted multiple times across slots 1, 2, 3, 4 (to a specific RB), the TO may refer to each slot, or if the PDCCH is transmitted multiple times across RB set 1, 2, 3, 4 (in a specific slot), the TO may refer to each RB set, or if the PDCCH is transmitted multiple times across a different time and frequency, the TO may refer to each time/frequency resource. Further, a TCI state used for DMRS channel estimation may be differently configured for each TO, and a TO configured with a different TCI state may be assumed to be transmitted in a different TRP/panel. The fact that a plurality of base stations repetitively or dividedly transmit a PDCCH means that the PDCCH is transmitted across multiple TOs and a union of TCI states configured at a corresponding TO includes two or more TCI states. For example, when the PDCCH is transmitted across TOs 1, 2, 3, 4, TCI states 1, 2, 3, 4 may be respectively configured for the TOs 1, 2, 3, 4, which means that TRP i cooperatively transmits the PDCCH at TO i.

Further, in the present disclosure, the fact that a UE repetitively transmits the same PUSCH so that a plurality of base stations (i.e., MTRP) receive it may mean that the same data has been transmitted through multiple PUSCHs. Here, each PUSCH may be transmitted by being optimized to a UL channel of a different TRP. For example, the UE repetitively transmits the same data through PUSCHs 1 and 2, the PUSCH 1 is transmitted using UL TCI state 1 for TRP 1, and link adaptation such as a precoder/MCS, etc. is also transmitted after a value optimized for a channel of the TRP 1 is scheduled. The PUSCH 2 is transmitted using UL TCI state 2 for TRP 2, and link adaptation such as a precoder/MCS, etc. is also transmitted after a value optimized for a channel of the TRP 2 is scheduled. In this instance, the PUSCHs 1 and 2 which are repetitively transmitted may be transmitted at a different time and may be TDMed, or FDMed, or SDMed.

Further, in the present disclosure, the fact that a UE dividedly transmits the same PUSCH so that a plurality of base stations (i.e., MTRP) receive it may mean that the UE transmits one data through one PUSCH, and the data is transmitted by dividing a resource allocated to the PUSCH and optimizing it to a UL channel of a different TRP. For example, the UE transmits the same data through 10 symbol PUSCHs, transmits first 5 symbols using UL TCI state 1 for TRP 1, and transmit link adaptation such as a precoder/MCS, etc. after a value optimized for a channel of the TRP 1 is scheduled. The UE transmits remaining 5 symbols using UL TCI state 2 for TRP 2, and also transmits link adaptation such as a precoder/MCS, etc. after a value optimized for a channel of the TRP 2 is scheduled. In the example, transmission for the TRP 1 and transmission for the TRP 2 have been TDMed by dividing one PUSCH into time resources, but they may be transmitted by being FDMed/SDMed.

Similar to the PUSCH transmission, the UE may repetitively transmit the same PUCCH or may dividedly transmit the same PUCCH so that the plurality of base stations (i.e., MTRP) receive it.

In order to repeatedly transmit or dividedly transmit PDCCH/PDSCH/PUSCH/PUCCH, for multiple TOs indicated to the UE, each TO is UL-transmitted toward a specific TRP or is DL-received from the specific TRP. In this instance, an UL TO (or TO of TRP 1) transmitted toward TRP 1 refers to a TO using a first value among two spatial relations, two UL TCIs, two UL power control parameters, or two PLRSs indicated to the UE, and an UL TO (or TO of TRP 2) transmitted toward TRP 2 refers to a TO using a second value among two spatial relations, two UL TCIs, two UL power control parameters, or two PLRSs indicated to the UE. Upon DL transmission, similar to this, DL TO (or TO of TRP 1) transmitted by TRP 1 refers to a TO using a first value among two DL TCI states (e.g., if two TCI states are configured to CORESET) indicated to the UE, and DL TO (or TO of TRP 2) transmitted by TRP 2 refers to a TO using a second value among two DL TCI states (e.g., if two TCI states are configured to CORESET) indicated to the UE.

The proposals of the present disclosure can be extended and applied to various channels such as PUSCH/PUCCH/PDSCH/PDCCH.

The proposals of the present disclosure can be extended and applied to both a case in which the channel is repetitively transmitted in a different time/frequency/space resource and a case in which the channel is dividedly transmitted in a different time/frequency/space resource.

The contents described above can be applied by being combined with methods to be described later in the present disclosure, or can be supplemented to clarify technical features of methods described in the present disclosure. Methods to be described below are distinguished merely for convenience of description. Therefore, it is obvious that partial configuration of any one method can be replaced by partial configuration of another method, or methods can be combined and applied.

The present disclosure proposes a method of configuring/activating/indicating a PUCCH repetition including a dynamic repetition transmission indication when a base station configures/activates/indicates PUCCH (e.g., HARQ ACK/NACK, CSI reporting, scheduling request, beam failure recovery, etc.) transmission of a UE, and proposes a PUCCH transmission method of a subsequent UE.

In NR Rel-15 and Rel-16, a base station may configure the number of repetitions based on a PUCCH format (e.g., PUCCH format 1, 3, 4) in PUCCH transmission of a UE, and an operation of the base station performing power control is defined to determine transmission power in the PUCCH transmission (e.g., A/N, CSI reporting, SR, BFR) of the UE. The power control operation includes an operation in which the base station configures/indicates an open-loop power control parameter to the UE and configures/indicates closed-loop power control information.

The PUCCH power control operation may be performed a follows.

(If spatialRelationInfo is not/is not configured) the base station may perform a default operation for each PUCCH resource of the UE. Alternatively, the base station may configure a power control parameter in the form of activating PUCCH-spatialRelationInfo for each PUCCH resource through an MAC CE message.

The operations basically target a single-TRP (S-TRP). If the UE performs multi-TRP (M-TRP) PUCCH transmission, the base station needs to separately provide Tx beam information and power control information for each PUCCH toward a different TRP in the PUCCH transmission operation and the power control operation.

An operation related to transmission of A/N PUCCH is described below.

In Rel-15/16 NR, for Ack/Nack (A/N) PUCCH for HARQ operation, the base station may indicate a PUCCH resource ID corresponding to an 8th value at most, based on a bit field size (e.g., 0, 1, 2, 3 bit), from a first value of a specific PUCCH resource set (i.e., PUCCH resource set ID = 0) through a PUCCH resource indicator (PRI) field of DL grant DCI. The base station may indicate, to the corresponding UE, a PUCCH resource, to which the UE will transmit A/N for a PDSCH scheduled (by the base station), through the PRI field.

If the PRI field is 0 bit, the UE may utilize a PUCCH resource ID corresponding to the first value within the PUCCH resource set.

Configurations/operations (power control, PUCCH repetition) related to the PUCCH are described below.

In Rel-15/16 NR, P0_nominal value for each PUCCH resource is determined by the 'p0-nominal' value within RRC parameter 'PUCCH-ConfigCommon', or the P0_nominal value is 0 if the corresponding value is not configured/provided by the base station.

An open-loop/closed-loop parameter except for the P0_nominal value for each PUCCH resource can be configured by activating/updating/connecting 'pucch-SpatialRelationInfoId' to a specific PUCCH resource. The activation/update/connection operation may be performed through the MAC CE message.

In the connection operation, 'p0-PUCCH-Id', 'pucch-PathlossReferenceRS-Id', and 'closedLoopIndex' are included in one 'pucch-SpatialRelationInfo' parameter.

If 'pucch-SpatialRelationInfoId' is not activated/updated/connected to the specific PUCCH resource, the UE may operate as follows. The UE may utilize P0-PUCCH value corresponding to the lowest PUCCH-Id (e.g., the minimum 'p0-PUCCH-Id' value in 'p0-Set') for P0_pucch value and utilize I=0 for closed-loop index I.

In addition, for a pathloss reference RS, the UE may operate as follows. If 'pathlossReferenceRSs' within 'PUCCH-PowerControl' IE has not been configured via RRC signaling or is in a state before being configured, the UE may utilize an SSB-RI corresponding to an SSB index used upon the PRACH transmission to obtain an MIB in an initial access step. If 'pathlossReferenceRSs' is configured to a UE via RRC signaling, the UE may utilize the pathloss reference RS corresponding to 'pucch-PathlossReferenceRS-Id' with index 0.

The existing configurations/operations related to (Rel-15/16) PUCCH repetition are described below.

For PUCCH format 1, 3 or 4, the number of slots may be configured to the UE by nrofSlots(2,4, 8).

The slot may be defined as follows.

For FDD, the repeated slot(s) is consecutive slot(s))

For TDD, based on SLIV (S and L Indicator Value) configured on the PUCCH, slot(s) in which a time domain (TD) resource by the SLIV within the slot is an uplink symbol, or slot(s) having a flexible symbol not a SSB symbol

In the repetition PUCCH, frequency hopping may be configured as inter-slot hopping or intra-slot hopping. The repetition PUCCH may refer to a PUCCH configured to be transmitted repeatedly.

Even if the repetition PUCCH satisfies a piggyback condition when colliding with the PUSCH, the UE does not transmit the PUSCH and transmits the PUCCH.

A priority rule related to the PUCCH repetition may be defined as follows.

HARQ-ACK > SR > CSI with higher priority > CSI with lower priority

The UE does not expect that starting slots of two (repetition) PUCCHs are the same.

If the two (repetition) PUCCHs with the same priority collide, the UE may prioritize (transmit) the (repetition) PUCCH with the earlier starting slot.

According to the priority rule, if two (repetition) PUCCHs collide, the UE transmits the (repetition) PUCCH with a higher priority.

In Rel-16 eMIMO, in multi-TRP PDSCH transmission, standardization was carried out for a single-DCI based PDSCH and a multi-DCI based PDSCH. In Rel-17 FeMIMO, standardization is going to be carried out for multi-TRP transmission except for the PDSCH (e.g., PDCCH, PUCCH, PUSCH, etc.). Hereinafter, multi-TRP is referred to as M-TRP, MTRP, etc. In M-TRP UL transmission (PUCCH, PUSCH), a transmission occasion (TO) group corresponding to each TRP may be configured/defined. Before configuration/indication/scheduling/triggering of each (PUCCH/PUSCH) TO transmission, configuration for a transmission method of each TO may be performed by the base station. For example, single-DCI based scheduling and multi-DCI based scheduling are possible for M-TRP PUSCH transmission. Before the scheduling (or through an indication upon the scheduling), timing advance (TA), rank, PUSCH DMRS port(s), transmission precoding matrix indicator (TPMI), Modulation and Coding Scheme (MCS), (OL/CL) power control parameter set, Tx beam (spatial relation), Tx panel, etc. may be configured/indicated for two or more multiple TOs.

Matters related to M-TRP enhancement are described below.

To support multi-TRP deployment targeting both FR1 and FR2, the following a) to d) may be considered.

a) Identify and specify features to improve reliability and robustness for channels other than PDSCH (that is, PDCCH, PUSCH, and PUCCH) using multi-TRP and/or multi-panel, with Rel. 16 reliability features as the baseline

b) Identify and specify QCL/TCI-related enhancements to enable inter-cell multi-TRP operations, assuming multi-DCI based multi-PDSCH reception

c) Evaluate and, if needed, specify beam-management-related enhancements for simultaneous multi-TRP transmission with multi-panel reception

d) Enhancement to support HST-SFN deployment scenario:

i. Identify and specify solution(s) on QCL assumption for DMRS, e.g. multiple QCL assumptions for the same DMRS port(s), targeting DL-only transmission

ii. Evaluate and, if the benefit over Rel. 16 HST enhancement baseline is demonstrated, specify QCL/QCL-like relation (including applicable type(s) and the associated requirement) between DL and UL signals by reusing the unified TCI framework.

As above, if the UE performs multi-TRP (M-TRP) PUCCH transmission, the base station needs to separately provide Tx beam information and power control information for each PUCCH toward a different TRP in the PUCCH transmission operation and the power control operation. Further, (considering the M-TRP scenario) even for the PUCCH repetition, in addition to a semi-static repetition indication per the existing PUCCH format, the need for more flexible and dynamic repetition configuration/indication is on the rise. Based on this background, the present disclosure proposes a method of configurating/activating/indicating a PUCCH repetition including a dynamic repetition transmission indication when a base station configures/activates/indicates PUCCH (e.g., A/N, CSI reporting, SR, BFR) transmission of a UE, and proposes a PUCCH transmission method of a subsequent UE.

In the present disclosure, '/' may be interpreted as 'and', 'or', or 'and/or' according to according to the context.

The following will be mainly described considering M-TRP PUCCH TDM repetition transmission of a single-panel UE in an M-TRP transmission scenario, but does not exclude other scenarios (e.g., TDM transmission of a multi-panel UE and FDM and SDM transmissions of a UE). The other scenarios can be included in an idea of the present disclosure.

[Proposal 1]

A method of configuring/indicating (enhanced) PUCCH repetition for a UE is described in detail below.

Proposal 1 describes a method of configuring/indicating a repetition for a UE PUCCH of a base station including a dynamic indication (e.g., PUCCH repetition indication via DCI).

[Proposal 1-1]

A base station may configure a candidate value range for a repetition number R value via higher layer signaling in PUCCH transmission of a UE. Detailed embodiments are as follows.

The base station may configure the candidate value range of the R value to the UE based on at least one of the following i) to iv). The R value that the UE applies upon the PUCCH repetition transmission may be determined based on interpretation of the candidate value range configured based on at least one of the following i) to iv).

For example, the R value (the repetition number) that the UE applies upon the PUCCH repetition transmission may be one value among values within the configured candidate value range (e.g., a value determined based on the number of available symbols among values within the candidate value range).

For example, the R value (the repetition number) that the UE applies upon the PUCCH repetition transmission may be a value determined based on values within the configured candidate value range (e.g., a value determined to be n times or 1/n times any one value among values within the candidate value range).

i) The candidate value range for the R value may be differently configured/interpreted for each PUCCH format (i.e., PUCCH format 0, 1, 2, 3, 4).

For example, a candidate value of the R value for PUCCH format 0, 2 corresponding to a short PUCCH may be configured as {2, 4, 8, 16}, and a candidate value of the R value for PUCCH format 1, 3, 4 corresponding to a long PUCCH may be configured as {2, 4, 6, 8}. This is to make a difference in the candidate value range of the R value for each PUCCH format because the number of symbols configurable for PUCCH resource itself and contents (e.g., A/N, CSI reporting, SR, etc.) of uplink control information (UCI) may vary depending on the PUCCH format.

Specifically, for the short PUCCH or less symbol PUCCH (in particular, for short PUCCH (PUCCH format 0, 2), since 2 symbol short PUCCHs are only a repetition transmission of 1 symbol short PUCCH), it may be effective in terms of robustness of PUCCH to set the candidate value of the R value to a large value in order to enhance a coverage.
ii) The candidate value range for the R value may be differently configured/interpreted based on a range of the number of configured symbols in each PUCCH resource.

For example, when the number of configured symbols in a PUCCH resource is between 1 and 2, a candidate value of R for the corresponding PUCCH resource may be configured as {4, 8, 12, 16}; when the number of configured symbols is between 4 and 7, a candidate value of R may be configured as {2, 4, 8, 16}; and when the number of configured symbols exceeds 7, a candidate value of R may be configured as {2, 4, 6, 8}. This is to set the candidate value range of the R value to larger values for the purpose of coverage enhancement as the number of PUCCH symbols decreases.
iii) The candidate value range for the R value may be differently configured/interpreted based on a range of the number of REs (or/and the number of PRBs) capable of performing UCI mapping configured in each PUCCH resource.

For example, similar to the examples, the robustness of PUCCH transmission can be secured by setting the candidate value range of the R value to larger values as the number of REs (or/and the number of PRBs) capable of performing the UCI mapping decreases.
iv) The candidate value range for the R value may be differently configured/interpreted for each PUCCH resource set (index). That is, the candidate value range for the R value may be differently configured/interpreted based on a range of UCI payload size.

According to the existing operation, the PUCCH resource may be configured within a specific PUCCH resource set among four PUCCH resource sets of index 0 to index 3.

The corresponding configuration may be performed by an implicit/explicit rule related to the UCI payload size. Specifically, a PUCCH resource set index to which the corresponding PUCCH resource belongs is determined based on the UCI payload size of the corresponding PUCCH resource.

A supportable UCI payload size $O\_u$ for a first PUCCH resource set is $\{1 \leq O\_u \leq 2\}$.

Supportable UCI payload sizes for second, third, and fourth PUCCH resource sets are $\{2 < O\_u \leq N\_2\}$, $\{N\_2 < O\_u \leq N\_3\}$, and $\{N\_3 < O\_u \leq 1706\}$, respectively (where $N\_2$ and $N\_3$ are configurable). $N\_2$, $N\_3$ is 1706 if $N\_2$ and $N\_3$ are not configured.

Based on this background, the robustness of PUCCH transmission can be secured by setting the candidate value range of the R value to larger values as the PUCCH resource set index decreases (i.e., as the UCI payload size of the corresponding PUCCH resource decreases).

For another example, the base station may configure/indicate the repetition transmission only when a proportion of the number of HARQ-ACK bits within UCI transmitted by the UE is high. That is, the range of the R value may be differently configured/interpreted based on a range of the number of HARQ-ACK bits within the UCI. For example, the robustness of PUCCH transmission can be secured by setting the candidate value range of the R value to larger values as the number of HARQ-ACK bits within the UCI increases.

The above embodiments of i) to iv) can be applied/utilized in the operation between the base station and the UE as a single embodiment, and can be applied/utilized in the operation between the base station and the UE as a specific combination of the embodiments. For example, in a state in which A repetitions are configured in a PUCCH resource set X and B repetitions are configured in a PUCCH resource set Y, based on a type of the PUCCH format and the number of symbols of the PUCCH resource within the PUCCH resource set X (or Y), a structure may be applied in which the UE interprets A (or B) configured in each PUCCH resource set as other value. For example, if a PUCCH format of a specific PUCCH resource within the PUCCH resource set X is a short PUCCH, or as the number of configured symbols in the corresponding PUCCH resource decreases, it may be configured so that the UE interprets/applies the A repetitions, that has been originally configured, to a larger repetition value (e.g., A + alpha and/or A*N (where N is a natural number)).

Alternatively, if the value of A (or B) is an n-th value in the candidate value range that has been configured in the corresponding PUCCH resource set, when a PUCCH format of a specific PUCCH resource within the PUCCH resource set X is a short PUCCH, or as the number of configured symbols in the corresponding PUCCH resource decreases, it may be configured so that the UE interprets/applies the value of A repetitions, that has been originally configured, to a larger value (i.e., (n+1)-th value) next to the value of A repetitions.

When the number of configured symbols is less than a predetermined value, the value of alpha/N (or a next value) may be determined based on a difference value (i.e., a difference value between the number of configured symbols and the predetermined value). For example, as the number of configured symbols decreases (as the difference value increases), the value of alpha/N may be determined as a value proportional/corresponding to the difference value.

For another example, a PUCCH repetition value configured/indicated (via RRC/DCI) for a PUCCH resource by the base station may be a repetition level not a value expressed by an exact number. A range of the repetition value according to the corresponding level may be determined by the repetition level.

Specifically, the base station may pre-configure a plurality of repetition levels to the UE. The base station may configure/indicate to the UE so that the UE repeatedly transmits the PUCCH by R value within a repetition level range determined based on the number of transmittable symbols (in case of intra-slot repetition)/the number of slots (in case of inter-slot repetition) in a time domain resource, in which the corresponding PUCCH resource is to be actually positioned, among the plurality of repetition levels.

For example, as shown in Table 7 below, the repetition level may be defined/configured. If the base station configures/indicates a repetition transmission for a specific PUCCH resource, the repetition level is determined by the number of symbols of the corresponding PUCCH resource. A repetition range may be determined based on the corresponding repetition level. The repetition range represents a range of the repetition number R according to the corresponding repetition level.

The UE may (adaptively) transmit the PUCCH resource based on a (maximum) repetition value within the corresponding repetition range based on the number of available symbols/the number of slots (depending on whether it is intra-slot repetition or inter-slot repetition).

Specifically, if the number of configured symbols in a specific PUCCH resource is two, a repetition level may be determined as 4, and R values (5 to 6) within a repetition range according to the repetition level may be applied/utilized. If a starting symbol within a slot (symbol indexes 0 to 13) of the corresponding PUCCH resource has been symbol index 2, the R value (to be applied) based on the number of symbol resource sets (index [2,3], [4,5], [6,7], [8,9], [10,11], [12,13]) available (maximally when the repetition is performed) within the slot among R values (5 to 6) within a repetition range may be determined as 6. The UE repeatedly transmits the PUCCH six times based on the R value (6). In case of slot-level repetition (or inter-slot repetition), the number of available symbol resources can be replaced by the number of available (contiguous) UL slot resources.

Table 7 below shows a method of configuring a PUCCH repetition value through configuration of a PUCCH repetition level.

[Table 7]

| Repetition level | PUCCH repetition range | Number of PUCCH symbol(s) |
|---|---|---|
| 1 | 2 to 3 | 11~14 |
| 2 | 3 to 4 | 7~10 |
| 3 | 4 to 5 | 3~6 |
| 4 | 5 to 6 | 1~2 |

Alternatively, the following operation may be considered as another example for the repetition level. Unlike the above-described example, the repetition level may represent the repetition number (i.e., repetition value) not a range (i.e., repetition range) related to the repetition number. Specifically, the base station may configure, to the UE, a plurality of repetition levels representing at least one repetition number (exact value) based on the number of PUCCH symbols. For example, the plurality of repetition levels may be configured as shown in Table 8 below. Based on the above configuration, an exact repetition value may be mapped per range of the number of configured symbols in a specific PUCCH resource.

[Table 8]

| Repetition level | 1~2 PUCCH symbols | 3~6 PUCCH symbols | 7~X PUCCH symbols | ... |
|---|---|---|---|---|
| 1 | repetition number = X1 | repetition number = X2 | repetition number = X3 | ... |
| 2 | repetition number = Y1 | repetition number = Y2 | repetition number = Y3 | ... |
| 3 | repetition number = Z1 | repetition number = Z2 | repetition number = Z3 | ... |
| 4 | repetition number = W1 | repetition number = W2 | repetition number = W3 | ... |

The base station may set a specific R value to a repetition number for the corresponding PUCCH (via higher layer signaling) in a candidate value range of R value of each UE PUCCH based on the embodiments. The R value may be set based on one of the following 1) or 2).

1) A specific value is directly set to the R value

2) A value based on a specific index (e.g., index representing a specific candidate value within a candidate value range) is set to the R value. For example, in a candidate value range of the R value mentioned in the embodiments, an n-th candidate value is set to the R value. The specific index (e.g., n = 1, 2, 3, 4, ...) may be configured in each PUCCH (or PUCCH resource (set)).

[Proposal 1-2]

A base station may indicate a specific R value (among values according to the candidate value range for the repetition number R value in the proposal 1-1) via dynamic signaling (e.g., DCI) in PUCCH transmission of a UE. Detailed embodiments are as follows.

i) The specific R value may be jointly encoded to a TDRA field for time domain resource allocation of a PDSCH of DL grant DCI.
For example, in a table for interpreting the TDRA field within DL DCI, each row includes {Start and Length Indicator (SLIV), TDRA mapping type}. The table for interpreting the TDRA field may be configured in the form of jointly encoding PUCCH repetition number R to each row in the form of ordered pairs in such a configuration (i.e., {SLIV, mapping type, PUCCH repetition number}). In other words, PUCCH repetition number in addition to SLIV and mapping type may be added to each column of the table for interpreting the TDRA field. The base station may indicate whether to perform the PUCCH repetition or/and the repetition number R value without additional signaling overhead.
ii) The specific R value may be jointly encoded to a PDSCH-to-HARQ_feedback timing indicator (K1 field) of DL grant DCI.

The PDSCH-to-HARQ_feedback timing indicator of DL DCI indicates, after the UE receives a PDSCH, a slot offset value (K1 value) for a slot, in which A/N PUCCH is to be transmitted, after a reception slot of the corresponding PDSCH. According to this embodiment, the PUCCH repetition number R may be jointly encoded to (information mapped to) each codepoint of a PDSCH-to-HARQ_feedback timing indicator field in the form of ordered pairs. As a detailed example, information mapped to each codepoint of the PDSCH-to-HARQ_feedback timing indicator field may be configured together with {K1 value, PUCCH repetition number}.
The base station may indicate the K1 value, and at the same time indicate whether to perform the PUCCH repetition or/and the repetition number R value without additional signaling overhead.
iii) When the base station configures/indicates a repetition transmission for PDSCH or/and PUSCH, the base station may use an R value for the PDSCH or/and the PUSCH for a PUCCH repetition indication.
For example, when the PDSCH/PUSCH, in which the repetition transmission is configured, is scheduled in a specific component carrier (CC)/bandwidth part (BWP), it may be configured/indicated by the base station so that a PUCCH of the UE transmitted in the CCBWP performs the repetition transmission.
Or/and, the indication of the PUCCH repetition may be performed by a COntrol REsource SET (CORESET) related to scheduling of the PDSCH/PUSCH in which the repetition transmission is configured in the CCBWP. Specifically, it may be configured/indicated by the base station so that the UE performs the repetition transmission for the PUCCH scheduled through the CORESET (or related to the CORESET). (Or/and, in particular, the repetition transmission may be also configured/indicated for A/N PUCCH of a PDSCH in which the repetition transmission is configured/indicated.)
As above, the repetition number R value of the UE PUCCH to which the repetition transmission is configured/indicated by the repetition transmission PDSCH or/and PUSCH may have a specific correlation (or dependency) with an R value configured/indicated for the PDSCH or/and the PUSCH. It may be configured/indicated by the base station so that the UE performs the PUCCH repetition transmission based on the R value configured/indicated for the PDSCH or/and the PUSCH and the specific correlation.
For example, the UE may determine/apply the R value of the repetition transmission PUCCH to 1/n times or n times the R value for the PDSCH/PUSCH (where n is a natural number). For another example, the UE may determine/apply the R value of the repetition transmission PUCCH to a value obtained by adding or subtracting an offset value R offset, that is preset (by higher layer signaling), to or from the R value for the PDSCH/PUSCH.
The n value/the offset value may be differently configured/indicated based on at least one of the following a) to c).

a) The number of symbols configured in PUCCH format or/and PUCCH resource
b) The number of REs capable of performing UCI mapping in a PUCCH resource
c) PUCCH resource set index

For example, the n value or the R_offset value may large configured/indicated for short PUCCH or as the number of symbols or the number of REs or the set index decreases.
For another example, as in the proposal 1-1, an R value (configured value) of the PUCCH may be differently applied based on a value that the R value of the PDSCH/PUSCH has for the RRC (pre-)configured PUCCH R value. For example, when the R value of the PDSCH/PUSCH is 2, the UE may be configured to apply the R value of the PUCCH as it is, and when the R value of the PDSCH/PUSCH is 4, the UE may be configured to apply a value, that is two times a configured value, as the R value for the corresponding PUCCH transmission.

Finally, as in the proposal 1-1, when candidate value ranges (sets) for the R value of the PUCCH configured via RRC signaling exist, the R value to be used for the PUCCH repetition transmission within a candidate value range of the PUCCH R value may be determined based on the R value of the PDSCH/PUSCH.

As a detailed example, based on a value that the R value of the PDSCH/PUSCH has, the UE may determine to apply which value within the candidate value range of the corresponding PUCCH R value. For example, it is assumed that a PUCCH R candidate value range of a specific PUCCH resource is {4, 8, 12, 16}. When an R value configured/indicated for PDSCH/PUSCH is 2 (first value) among {2, 4, 6, 8}, the UE may apply 4 (i.e., first value among {4, 8, 12, 16}) for a PUCCH R value. When the R value configured/indicated for PDSCH/PUSCH is 4 (second value) among {2, 4, 6, 8}, the UE may apply 8 (i.e., second value among {4, 8, 12, 16}) for the PUCCH R value.

Based on the R value for the PUCCH configured/indicated in the proposal 1-2 (or based on order (first, second, third, ..., etc.) according to the candidate value range of the R value), target PUCCH resource(s) indicated by codepoint of a PRI field of DL DCI (or/and in which transmission is configured/activated by RRC/MAC CE) may be differently interpreted as follows.

Specifically, if an R value of a PUCCH is {R1, R2, R3, R4}, a PUCCH resource (set) for each of R1, R2, R3 and R4 may be separately defined/configured/indicated. For example, PUCCH resource set 0, 1, 2, 3 (or/and PUCCH resource indices) when the R value of the PUCCH is R1 may be defined/configured/indicated separately from PUCCH resource set 0, 1, 2, 3 (or/and PUCCH resource indices) when the R value is R2 (R3/R4).

When the base station configures/indicates the PUCCH transmission based on the R value of the PUCCH, a target PUCCH resource that the UE has to transmit may vary.

In particular, for A/N PUCCH, the base station may configure a plurality of PUCCH resources having a different repetition number for each codepoint of a PRI field of DL DCI. For example, in codepoint '000' of the PRI field, a PUCCH resource for R1 among an R value range {R1, R2, R3, R4} of the PUCCH, a PUCCH resource for R2, a PUCCH resource for R3, and a PUCCH resource for R4 may be individually configured/mapped.

That is, the UE may transmit a PUCCH resource corresponding to a PUCCH repetition number (indicated by DCI) among the plurality of PUCCH resources configured/mapped to single codepoint of the PRI field indicated in DL DCI.

In addition, in dynamic signaling of the R value via DCI in the proposal 1-2, DCI transmitted by the base station may dynamically configure/indicate the number of OFDM symbols capable of being used for the corresponding PUCCH resource within a slot. The number of (available) OFDM symbols may be indicated (by being jointly-encoded) through the PRI field of the DCI. In the PUCCH repetition transmission of the UE, if an intra-slot repetition is configured/indicated, a repetition transmission number may be determined based on a maximum repetition transmission number (R or less considering the number of available symbols) within a slot in which the corresponding PUCCH repetition transmission is configured/indicated based on the number of (available) OFDM symbols.

[Proposal 1-3]

A base station may configure/indicate, to a UE, a performing method related to a PUCCH repetition (intra-slot repetition operation or inter-slot repetition operation). That is, the base station may configure/indicate whether the UE performs the intra-slot repetition operation or performs the inter-slot repetition operation, in a PUCCH repetition transmission of the UE.

The intra-slot repetition operation may include a symbol-level repetition operation.

The inter-slot repetition operation is a slot-level repetition operation or a symbol-level repetition operation, but may include at least one of repetition operations beyond a slot boundary.

Detailed embodiments are as follows.

i) Whether the UE performs the intra-slot repetition operation or performs the inter-slot repetition operation may be determined based on a PUCCH format.

For example, the base station may configure so that the UE performs intra-slot PUCCH repetition in case of short PUCCH (format 0, 2) and the UE performs inter-slot PUCCH repetition in case of long PUCCH (format 1, 3, 4).

Through this, the (intra-slot/inter-slot) repetition operation that allows a PUCCH repetition to be completed may be configured in a range of resources configured based on the PUCCH format. That is, the intra-slot repetition operation may be configured so that repetition ends within a slot in case of a short PUCCH with a small number of symbols. Due to limited symbol resources within a slot in case of a long PUCCH with a relatively large number of symbols, because it may be difficult to complete the repetition within the slot, it may be configured so that the UE performs the inter-slot repetition and completes the repetition.

ii) The base station may configure/activate whether to perform the intra-slot repetition or the inter-slot repetition for each PUCCH format via higher layer signaling in the PUCCH repetition transmission of the UE. This embodiment is a method that puts more emphasis on flexibility than the embodiment according to the i).

iii) The base station may configure, to the UE, a threshold for determining the performing method (intra-slot repetition/inter-slot repetition) related to the PUCCH repetition via higher layer signaling. The threshold may be based on a specific PUCCH resource set (e.g., a specific payload size among UCI payload sizes configured in each PUCCH resource set) among PUCCH resource sets configured to the UE. Alternatively, the base station may configure/indicate switching for the intra-slot repetition and the inter-slot repetition per PUCCH resource set via higher layer signaling.

For example, the threshold may be a PUCCH resource set index or a specific value among UCI payload sizes configured in the PUCCH. If the threshold is PUCCH resource set index 1, the UE may operate as follows. The UE may perform the intra-slot repetition on an index (PUCCH resource set index 0/1) equal to or less than the corresponding threshold. The UE may perform the inter-slot repetition on an index (PUCCH resource set index 2/3) greater than the corresponding threshold.

Through the above operation, if the UCI payload size is small, the UE may perform the intra-slot repetition and complete the repetition within the slot, thereby reducing UL resource waste resulting from the PUCCH repetition. Alternatively, for another example, the base station may configure/activate whether to perform the intra-slot repetition or the inter-slot repetition on each PUCCH resource set (index) via higher layer signaling.

According to another embodiment, a threshold for determining a performing method (intra-slot repetition/inter-slot repetition) related to the PUCCH repetition may be configured/defined based on other information not the PUCCH resource index (UCI payload size). The threshold may be based on information on the number of symbols of the PUCCH resource configured in the UE.

For example, the threshold may be configured/defined as a value related to the number of symbols configured in the PUCCH resource. If the threshold is configured/defined as 2, the UE may perform the intra-slot repetition on PUCCH format 0/2 (because up to 2 symbols can be configured). The UE may perform the intra-slot repetition (e.g., when the number of configured symbols is less than or equal to 2) or inter-slot repetition (e.g., when the number of configured symbols is greater than 2) on PUCCH format 1/3/4 based on the number of symbols configured in the PUCCH resource.

iv) The UE may perform the intra-slot repetition or the inter-slot repetition based on whether or not HARQ-ACK is included in UCI information configured in the PUCCH resource.

For example, if HARQ-ACK is included in UCI information configured in a PUCCH resource in which the repetition transmission is configured/indicated, the UE may perform the intra-slot repetition. If the HARQ-ACK is not included in the UCI information configured in the PUCCH resource, the UE may perform the inter-slot repetition.

The following effects can be derived from the present embodiment.

Since A/N information for PDSCH among PUCCH UCI is a content with high importance, the A/N information for the PDSCH may be transmitted to the base station at a low latency through intra-slot repetition (to symbol-level repetition).

The PUCCH resource in the iv) may be an SR PUCCH or an aperiodic CSI reporting PUCCH.

v) A performing method (inter-slot repetition/intra-slot repetition) related to the PUCCH repetition may be determined based on repetition transmission configuration/indication for PDCCH/PDSCH/PUSCH.

The repetition transmission configuration/indication for the PDCCH/PDSCH/PUSCH of the base station has dependency based on whether the performing method is the intra-slot repetition or the inter-slot repetition, and the PUCCH repetition method may be determined.

For example, if a repetition transmission PDCCH/PDSCH/PUSCH is configured/indicated in a specific CC/BWP, it may be configured/indicated by the base station so that a PUCCH repetition transmission of the UE transmitted in the CCBWP applies and performs a transmission method (intra-slot repetition or inter-slot repetition) of the repetition transmission PDCCH/PDSCH/PUSCH.

Or/and, it may be configured/indicated by the base station so that a PUCCH repetition transmission of the UE scheduled by a CORESET (or associated with the CORESET) related to scheduling of the repetition transmission PDCCH/PDSCH/PUSCH in the CCBWP applies and performs the transmission method of the repetition transmission PDCCH/PDSCH/PUSCH. (Or/and, in particular, in case of A/N PUCCH of PDSCH in which the repetition transmission is configured/indicated, a repetition transmission method of the PDSCH causing the A/N PUCCH may be applied.)

vi) A PUCCH repetition performing method (inter-slot repetition/intra-slot repetition) may be determined based on a PUCCH transmission related signaling scheme by the base station.

For a PUCCH in which transmission is dynamically indicated by the base station, the UE may be configured to perform the intra-slot repetition. For a PUCCH in which transmission is semi-statically configured/activated by the base station, the UE may be defined/configured to perform the inter-slot repetition.

That is, because an A/N PUCCH in which transmission is indicated through a PRI field of DCI has importance, the UE may perform the intra-slot repetition to achieve low latency transmission/reception, and the UE may perform the intra-slot repetition on remaining periodic/semi-persistent CSI reporting PUCCH. A PUCCH configured so that the UE performs the intra-slot repetition may include at least one of SR PUCCH, BFR PUCCH, or aperiodic CSI reporting PUCCH.

In the proposal 1-3, the number of repetition transmissions of the PUCCH resource of the UE may vary depending on a performing method related to PUCCH repetition (intra-slot repetition/inter-slot repetition). For example, if the intra-slot repetition is configured/indicated in the PUCCH repetition transmission of the UE, a repetition transmission number may be determined based on a maximum repetition transmission number (considering the number of available symbols) within a slot in which the corresponding PUCCH repetition transmission is configured/indicated based on the number of symbols of the corresponding PUCCH resource. On the other hand, if the inter-slot repetition is configured/indicated in the PUCCH repetition transmission of the UE, repetition transmission of the PUCCH resource may be performed by the R value in the proposal 1-1 and the proposal 1-2.

In the proposal 1 (the proposals 1-1 to 1-3), a parameter R value related to the PUCCH repetition transmission number may vary depending on the PUCCH repetition performing method (intra-slot repetition/inter-slot repetition).

Specifically, interpretation/application of the R value based on the proposal 1 may vary depending on whether the UE performs intra-slot repetition (e.g., symbol-level repetition operation) or performs inter-slot repetition (e.g., slot-level repetition or symbol-level repetition, but a repetition operation beyond a slot boundary).

In the PUCCH repetition transmission, a transmission slot location of an initial PUCCH may be indicated by K1 field of DCI or configured/activated/updated by higher layer signaling (RRC/MAC CE).

For example, if the repetition transmission is the intra-slot repetition, a transmission location of an initial PUCCH during R repetition transmissions may be determined by TDRA information (i.e., starting symbol index, symbol duration) within a slot of a PUCCH resource in which the repetition transmission is configured/indicated. After the initial PUCCH transmission, remaining repetition transmission may be performed on contiguous symbols after the transmission location of the corresponding initial PUCCH.

For another example, if the repetition transmission is a symbol-level repetition among methods of the inter-slot repetition but is a repetition operation beyond the slot boundary, a transmission location of an initial PUCCH during R repetition transmissions may be determined by TDRA information (i.e., starting symbol index, symbol duration) within a slot of a PUCCH resource in which the repetition transmission is configured/indicated. After the initial PUCCH transmission, remaining repetition transmission (across multiple slots) may be performed on contiguous symbols and contiguous (valid) UL slots after the transmission location of the corresponding initial PUCCH.

For another example, if the repetition transmission is the inter-slot repetition and the slot-level repetition (repetition as many as R slots on a per slot basis), the PUCCH repetition transmission may be performed on R contiguous (valid) UL slots from a slot in which the initial PUCCH is transmitted. A location within the slot may be determined based on TDRA information within a slot of a PUCCH resource in which the repetition transmission is configured/indicated.

There may be a case in which resources (symbol(s)/slot(s)) required to perform the repetition transmission as many as the repetition number R are insufficient when performing the intra-slot repetition (e.g., symbol-level repetition operation) or performing the inter-slot repetition in the proposal 1 (the proposals 1-1 to 1-3).

Specifically, there may be a case in which available symbol(s) within a slot are insufficient to perform the repetition transmission as many as the PUCCH repetition transmission number R, or contiguous (valid) UL slots are insufficient (e.g., when repetition transmission is indicated in an UL slot, that is a sixth slot, in a configuration such as 'DDDUUUDD' by TDD DL/UL configuration, and a DL slot follows the corresponding slot). In this case, the UE may operate as follows.

The UE may 1) drop the corresponding configured/indicated PUCCH repetition or 2) perform the PUCCH repetition transmission by utilizing/using only available OFDM symbols (or/and utilizing/using only available contiguous (valid) UL slots).

Alternatively, even if resources for the PUCCH repetition transmission are not contiguous, it may be configured/indicated by the base station so that the UE performs remaining repetition transmission on valid symbol(s) (UL symbol(s)) or valid slot(s) (UL slot(s)) arriving after non-valid symbol(s) (UL symbol(s)) or non-valid slot(s) (UL slot(s)).

[Proposal 2]

A method of configuring/indicating an M-TRP PUCCH transmission (based on the PUCCH repetition transmission method of the proposal 1) is described in detail below.

In order to support an M-TRP PUCCH transmission of a UE, in a PUCCH resource indicator (PRI) field of DL grant DCI (for an A/N PUCCH), i) a single PUCCH resource in which two or more spatial relation info (/UL TCI states/unified TCI states) are configured may be configured/mapped to a PRI field codepoint, or ii) multiple (e.g., two) PUCCH resources may be configured/mapped to one PRI field codepoint.

The M-TRP PUCCH transmission of the UE may be supported through the PRI field of DL DCI based on the i)/ii) using a method in which a base station indicates a specific codepoint. In addition, if a single PUCCH resource or multiple PUCCH resources in which two or more Tx beam RSs of the i)/ii) are configured are indicated in the form of a semi-static transmission, the M-TRP PUCCH transmission may be supported even in a semi-static PUCCH transmission (P/SP CSI reporting PUCCH, etc.).

For the M-TRP PUCCH repetition configuration/indication using the method of the ii), pairing of different PUCCH resources may be performed. Detailed embodiments are as follows.

Embodiment 1) The UE may perform the M-TRP PUCCH repetition using TDRA/repetition information configured in each PUCCH resource among the multiple PUCCH resources (among the paired PUCCHs) of the ii) (where each PUCCH resource corresponds to a different TRP). In this instance, the UE may perform the following assumption.

The UE is not expected to be scheduled simultaneously with different repetition PUCCH resource(s). If the different multiple PUCCH resources collide in a time domain, the UE may prioritize a PUCCH resource with a lower index and drop remaining colliding PUCCH resource(s). Alternatively, for a PUCCH resource with a low priority among colliding PUCCH resources, the UE may perform puncturing/rate-matching only on a resource domain part (symbol/slot) in which a collision occurs, and then may perform the corresponding PUCCH transmission through available resources (symbol/slot).

In particular, if the base station indicates the PRI via DCI to support the operations of the i) and ii), a plurality of K1 values (PDSCH-to-HARQ_feedback timing) may be indicated. The number of the plurality of K1 values may be based on the number of Tx beam RSs of the i) or the number of PUCCH resources of the ii). The plurality of K1 values may be indicated through a plurality of K1 fields, or indicated by jointly encoding the plurality of K1 values to a single K1 field (in the form of ordered pairs).

In the M-TRP transmission of the multiple PUCCH resources of the ii), the following operation may be considered for TRP cycling.

In R value configured/indicated in each PUCCH resource, the UE does not perform all the PUCCH repetition transmissions according to the R value and may be configured/indicated to transmit the PUCCH resource in R/M cycles in R transmission occasions (TOs), where M is the number of the multiple PUCCH resources or/and the number of TRPs. That is, the UE does not repeatedly transmit the PUCCH resource R times and may transmit the PUCCH only in R/M TOs by skipping a specific TO. As a detailed example, it may be assumed that R is 4 and the number of TRPs is 2. In this instance, the UE may transmit the PUCCH only in two TOs (e.g., TO1 and TO3) among four TOs TO1 to TO4. That is, the UE may transmit one of two PUCCH resources in the TO1 and the TO3 (TRP1). The UE may transmit the other of the two PUCCH resources in the TO2 and the TO4 (TRP2).

In addition, the base station may configure/indicate a specific starting TO value in the R value of the multiple PUCCH resources via separate signaling.

Embodiment 2) The UE may perform M-TRP PUCCH repetition transmission using TDRA/repetition information by a specific (primary) PUCCH resource among multiple PUCCH resources (among the paired PUCCHs) based on the ii). In a repetition number R by the specific (primary) PUCCH resource, which PUCCH resource is transmitted among the paired PUCCHs in each transmission occasion (TO) may be determined by a configuration indication method of the following a) or/and b).

The paired PUCCH may be explicitly configured/indicated, and an implicit rule may be also applied so that a lowest nth resource in descending order of index in a specific PUCCH group using a PUCCH resource group introduced in Rel-16 can be paired with a lowest nth resource in descending order of index in other PUCCH group.

The M-TRP PUCCH transmission method using the i) and ii) may be used to perform M-TRP transmission for the PUCCH repetition number R (in the proposal 1).

(In the i)) in the PUCCH repetition number R, the base station may perform the configuration/indication so that the UE operates based on the following a) or b).

    a) The UE transmits the PUCCH by applying information of a plurality of Tx beam RSs in the form of cycling.
    b) The UE repeats an operation of transmitting the PUCCH as many as R/m (where m is the number of TRPs) for information of a specific Tx beam RS and then performing the PUCCH transmission as many as R/m using information of remaining Tx beam RSs.

(In the ii)) in the PUCCH repetition number R, the base station may perform the configuration/indication so that the UE operates based on the following a) or b).

    a) The UE transmits the PUCCH by applying a plurality of PUCCH resources in the form of cycling.
    b) The UE repeats an operation of transmitting the PUCCH as many as R/m (where m is the number of TRPs) for a specific PUCCH resource and then performing the PUCCH transmission as many as R/m using remaining PUCCH resources.

In order to configure/indicate the operations of the a) and b), the base station may perform an operation based on at least one of the following 1) to 7).

1) In the PUCCH resource(s) configuration of the i)/ii), the base station configures the operation of the a) or b).

2) Through a separate 1-bit indicator upon a PRI indication, the base station switches the operation of the a) or b).

3) The base station jointly encodes an indicator for the operation of the a) or b) to codepoint of a PRI field.

4) The base station switches the operation of the a) or b) depending on whether signaling related to the PUCCH transmission by the base station is dynamic or semi-static (the a) if it is dynamic, and the b) if it is semi-static). In the case of the PUCCH transmission indication based on the dynamic signaling, the corresponding PUCCH may be related to important information, and thus transmission of the corresponding information can be performed based on higher reliability and low latency characteristics through TRP diversity according to the operation of the a).

5) The base station switches the operation of the a) or b) based on a symbol duration configured in the PUCCH resource (the a) if the duration is long, and the b) if the duration is short). If the base station performs the operation of the b) when the symbol duration is long, a blockage may occur in a wireless link between a preceding target TRP and the UE, and the transmission/reception for the corresponding target TRP may be impossible for multiple slots. In this case, because the PUCCH transmission is impossible for a long duration obtained by multiplying the R/m value by the corresponding symbol duration, the operation of a) performing the TRP cycling may be valid as the symbol duration becomes longer.

6) The base station switches the operation of a) or b) based on short/long PUCCH (the a) if it is long PUCCH, and the b) if it is short PUCCH). The same effect as the switching method according to the symbol duration can be obtained.

7) The base station sets a threshold based on the R value (the a) when the R value is equal to or greater than a specific threshold, and the b) when the R value is equal to or less than the specific threshold).

If the base station performs the operation of the b) when the R value is large, a blockage may occur in a preceding target TRP, and the transmission/reception may be impossible. In this case, because the PUCCH transmission is impossible for a long duration, the same effect as the switching method according to the symbol duration can be obtained.

The R value for repetition of the PUCCH may be determined through one or more combinations of embodiments according to the above-described proposal 1-1 (i to iv), proposal 1-2 (i to iii), proposal 1-3, and proposal 2. That is, a criterion for determining the R value for repetition of the PUCCH may be based on one or more combinations of embodiments according to the above-described proposal 1-1 (i to iv), proposal 1-2 (i to iii), proposal 1-3, and proposal 2.

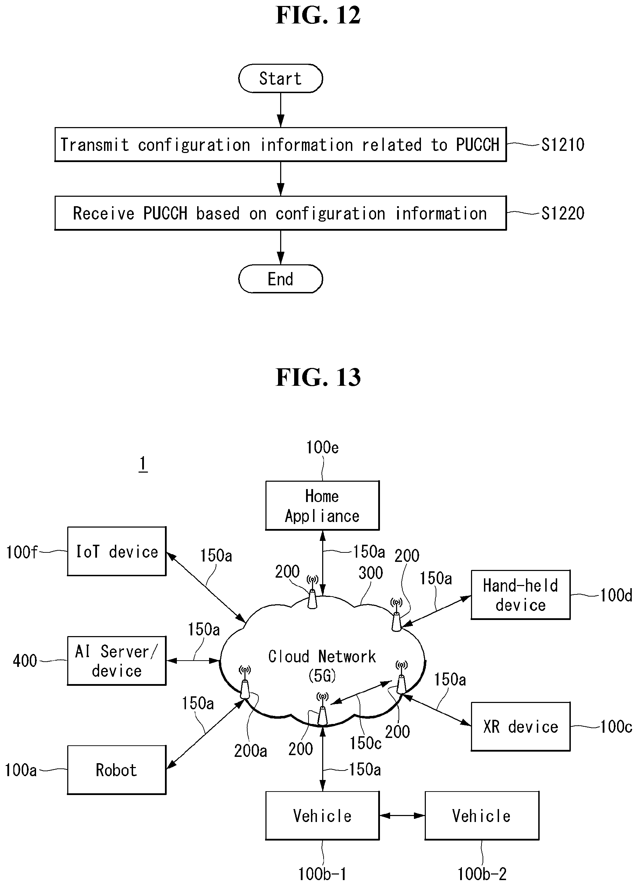

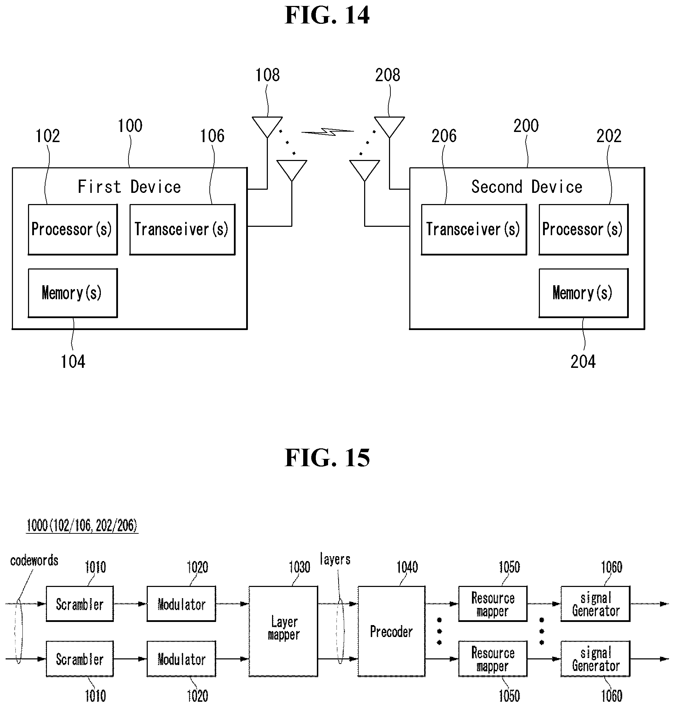

From an implementation perspective, the UE/BS operations according to the above-described embodiments (e.g., operations related to the PUCCH repetition based on at least one of the proposal 1 (1-1, 1-2, 1-3) and/or the proposal 2) may be processed by a device of FIGS. 13 to 17 to be described later (e.g., processors 102 and 202 of FIG. 14).

In addition, the UE/BS operations according to the above-described embodiments (e.g., operations related to the PUCCH repetition based on at least one of the proposal 1 (1-1, 1-2, 1-3) and/or the proposal 2) may be stored in a memory (e.g., 104 and 204 of FIG. 14) in the form of a command/program (e.g., instruction, executable code) for running at least one processor (e.g., 102 and 202 of FIG. 14).

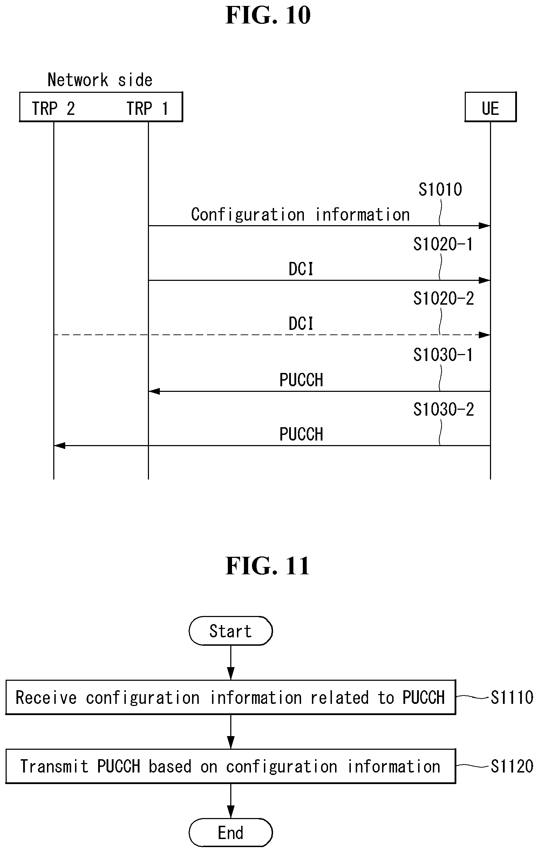

FIG. 10 is a flowchart illustrating a signaling procedure related to a PUCCH repetition to which a method described in the present disclosure is applicable.

Specifically, FIG. 10 illustrates signaling between a UE and a network side (e.g., TRP 1, TRP 2) in a situation of multiple TRPs (i.e., M-TRP, or multiple cells, all the following TRPs can be replaced by a cell) to which methods described in the present disclosure (e.g., at least one of the proposal 1 (1-1, 1-2, 1-3) and the proposal 2) are applicable.

In the present disclosure, the UE/network side is merely an example and may be replaced by various devices to be described below with reference to FIGS. 13 to 17. FIG. 10 is merely for convenience of description and does not limit a scope of the present disclosure. Further, some step(s) illustrated in FIG. 10 may be omitted depending on situation and/or setting, etc.

Referring to FIG. 10, signaling between the two TRPs and the UE is considered for convenience of description, but it is obvious that the signaling method can be extended and applied to signaling between multiple TRPs and multiple UEs. In the following description, the network side may be one base station (BS) including a plurality of TRPs, and may be one cell including a plurality of TRPs. For example, ideal/non-ideal backhaul may be configured between TRP 1 and TRP 2 constituting the network side. The following description is described based on the multiple TRPs, but it can be equally extended and applied to the transmission across multiple panels. In addition, in the present disclosure, an operation of the UE receiving a signal from the TRP 1/TRP 2 may also be interpreted/described as an operation (may be an operation) of the UE receiving the signal from the network side (via/using the TRP 1/TRP 2), and an operation of the UE transmitting a signal to the TRP 1/TRP 2 may also be interpreted/described as an operation (may be an operation) of the UE transmitting the signal to the network side (via/using the TRP 1/TRP 2), and vice versa.

A UE may receive configuration information from a BS (network side) (e.g., TRP 1), in S1010. The configuration information may be configuration information (e.g., PUCCH config IE) based on at least one of the above-described proposal 1 (1-1, 1-2, 1-3) and proposal 2.

For example, according to the proposal 1-1, the configuration information may include information for candidate values of a repetition number (e.g., R value) related to a PUCCH transmission. The information for the candidate values of the repetition number (e.g., R value) may represent a candidate value range. The candidate value range may be configured based on at least one of i) a PUCCH format, ii) the number of symbols configured in each PUCCH resource, iii) the number of REs (or/and the number of PRBs) capable of performing UCI mapping configured in each PUCCH resource, or iv) each PUCCH resource set (index).

For example, according to the proposal 1-1, the configuration information may include information for a plurality of repetition levels related to a PUCCH repetition number (R value).

The repetition level may be configured to represent a range (PUCCH repetition range) of the PUCCH repetition number per the number (range) of PUCCH symbol(s) (e.g., when the number of PUCCH symbols is 11 to 14, the PUCCH repetition number is 2 to 3, see Table 7 above).

The repetition level may be configured to represent at least one repetition number (exact value) per the number (range) of PUCCH symbol(s) (e.g., when the number of PUCCH symbol(s) is 1 to 2, the repetition number is X1, and when the number of PUCCH symbol(s) is 3 to 6, the repetition number is X2, see Table 8 above).

For example, according to the proposal 1-2(iii), the configuration information may include information for an offset value (e.g., R_offset value) related to the determination of the R value based on the candidate value range.

For example, according to the proposal 1-3, the configuration information may include information representing a performing method (intra-slot repetition/inter-slot repetition) related to a PUCCH repetition transmission. Specifically, whether the PUCCH repetition transmission is performed by the intra-slot repetition or the inter-slot repetition may be determined by the information representing the performing method related to the repetition transmission.

The information representing the performing method related to the repetition transmission may represent the intra-slot repetition or the inter-slot repetition based on a PUCCH format (ii of the proposal 1-3).

The information representing the performing method related to the repetition transmission may represent the intra-slot repetition or the inter-slot repetition based on a PUCCH resource set (index) and/or an UCI payload size (iii of the proposal 1-3).

The information representing the performing method related to the repetition transmission may include a threshold related to the determination of the intra-slot repetition or the inter-slot repetition. The threshold may be based on a specific PUCCH resource set (index) or a specific UCI payload size. As a detailed example, if the UE is configured with PUCCH resource sets 0 to 3 and the threshold is PUCCH resource set index 1, the method of performing the PUCCH repetition may be determined as follows. Based on the threshold, the intra-slot repetition may be determined for the PUCCH resource sets 0 and 1, and the inter-slot repetition may be determined for the PUCCH resource sets 2 and 3.

For example, according to the proposal 2, the configuration information may include mapping information related to a PRI field (of DL grant DCI).

Based on the mapping information, i) a single PUCCH resource configured with two or more spatial relation info may be mapped to codepoint of the PRI field, and ii) two or more PUCCH resources (multiple PUCCH resources) may be mapped to codepoint of the PRI field.

The configuration information may include information representing a performing method related to M-TRP PUCCH repetition. The corresponding information may represent whether or not to perform a change of Tx beam/PUCCH resource (whether or not to perform TRP switching) related to M-TRP PUCCH repetition transmission. Specifically, based on the corresponding information, the M-TRP PUCCH repetition transmission may be performed based on the following i) or ii).

> i) Tx beam RS information/PUCCH resource is changed for each PUCCH transmission (each TO).
> ii) If the repetition transmission as many as a specific number (e.g., the repetition number, the number of TRPs, or the number of two or more PUCCH resources mapped to the codepoint of the PRI field) is completed based on one Tx beam RS information/PUCCH resource, Tx beam RS information/PUCCH resource is changed.

For example, according to the proposal 2, the configuration information may include mapping information between PUCCH resource(s) according to on the repetition number and the PRI field. Based on the mapping information, in values (e.g., R1, R2, R3, and R4) according to the candidate value range of the repetition number, PUCCH resource(s) for each value (e.g., PUCCH resource for R1/PUCCH resource for R2/PUCCH resource for R3/PUCCH resource for R4) may be configured/mapped to the codepoint of the PRI field.

For example, an operation of the UE (100/200 of FIG. 14) in the step S1010 to receive the configuration information from the BS (e.g., TRP1) (100/200 of FIG. 14) may be implemented by a device of FIGS. 13 to 17 to be described below. For example, referring to FIG. 14, one or more processors 102 may control one or more transceivers 106 and/or one or more memories 104 so as to receive the configuration information from the BS 200, and the one or more transceivers 106 may receive the configuration information from the BS 200.

The UE may receive DCI from the BS (e.g., TRP 1/TRP 2), in S1020. The transmission of the DCI may be based on M-DCI (multiple DCI) based M-TRP or S-DCI (single DCI) based M-TRP. For the single DCI based UL/DL transmission, the UE may receive the DCI from the BS (e.g., TRP 1), in S1020-1. For the multiple DCI based UL/DL transmission, the UE may receive the DCI from each BS (e.g., TRP 1 and TRP 2), in S1020-2.

The DCI may be based on at least one (in particular, the proposal 1-2 and the proposal 2) of the above-described proposal 1 (1-1, 1-2, 1-3) and proposal 2.

For example, according to the proposal 1-2(i, ii), the DCI may include information related to the repetition number. The information related to the repetition number may represent one of values according to the candidate value range.

The information related to the repetition number may be based on a specific field of the DCI. The specific field may be related to time domain resource allocation (TDRA) or PDSCH-to-HARQ_feedback timing. The specific field may represent one of values according to the candidate value range based on joint encoding.

For example, according to the proposal 1-2(iii), the PUCCH repetition transmission (and/or the repetition number (R value)) may be indicated/determined based on the DCI being transmitted via a specific CCBWP or a specific CORESET.

The specific CCBWP or the specific CORESET may be related to scheduling of a PDSCH/PUSCH in which the repetition transmission is configured. The repetition number may be determined based on a repetition number related to the PDSCH/PUSCH. For example, the repetition number may be determined to be n times or 1/n times the repetition number related to the PDSCH/PUSCH. For another example, the repetition number may be determined as a value obtained by adding (subtracting) the offset value (e.g., R offset value) to (from) the repetition number related to the PDSCH/PUSCH.

For example, according to the proposal 1-2, a target PUCCH resource represented by the PRI field of the DCI may be determined based on the repetition number (R value). As a detailed example, codepoint '000' of the PRI field may represent a PUCCH resource for each value (e.g., PUCCH resource for R2) in values R1, R2, R3, and R4 according to the candidate value range of the repetition number.

For example, an operation of the UE (100/200 of FIG. 14) in the step S 1020 to receive the DCI from the BS (100/200 of FIG. 14) may be implemented by the device of FIGS. 13 to 17 to be described below. For example, referring to FIG. 14, one or more processors 102 may control one or more transceivers 106 and/or one or more memories 104 so as to receive the DCI from the BS 200, and the one or more transceivers 106 may receive the DCI from the BS 200.

The UE transmits a PUCCH to the BS (e.g., TRP 1/TRP 2), in S1030-1 and S1030-2. The PUCCH may be transmitted based on at least one of the above-described proposal 1 (1-1, 1-2, 1-3) and proposal 2.

For example, according to the proposal 1-1, the PUCCH may be repeatedly transmitted based on the information for the candidate values of the repetition number (e.g., R value). According to the proposal 1-2, the PUCCH may be repeatedly transmitted based on a value (R value) indicated by the DCI among the values according to the candidate value range.

For example, according to the proposal 1-3, the performing method related to the repetition transmission (i.e., intra-slot repetition or inter-slot repetition) may be determined based on at least one of i) a format of the PUCCH, ii) the threshold configured through the configuration information, iii) UCI information transmitted via the PUCCH (e.g., if HARQ-ACK is included, the intra-slot repetition is determined, otherwise the inter-slot repetition is determined), iv) repetition transmission configuration of pre-scheduled PDCCH/PDSCH/PUSCH through the CCBWP (CORESET) related to the DCI, or v) characteristic related to a transmission indication of the PUCCH (e.g., if the PUCCH transmission is based on a semi-static indication, the inter-slot repetition may be determined, and if the PUCCH transmission is based on a dynamic indication, the intra-slot repetition may be determined).

For example, the repetition transmission may be performed according to the proposal 2.

The repetition transmission may be performed based on TDRA/repetition information configured in each PUCCH resource among two or more PUCCH resources represented by the PRI field of the DCI (Embodiment 1 of the proposal 2). Alternatively, the repetition transmission may be performed based on TDRA/repetition information configured in a specific PUCCH resource among two or more PUCCH resources represented by the PRI field of the DCI (Embodiment 2 of the proposal 2).

The Tx beam (RS information)/PUCCH resource related to the PUCCH transmission may be changed based on the a) or b) of the proposal 2.

The Tx beam (RS information)/PUCCH resource related to the PUCCH transmission may be changed to a Tx beam (RS information)/PUCCH resource related to other TRP (e.g., TRP 1 or TRP 2) per each transmission (each TO) (operation in the a) of the proposal 2).

The Tx beam (RS information)/PUCCH resource related to the PUCCH transmission may be changed to other Tx beam (RS information)/PUCCH resource (e.g., Tx beam/PUCCH resource related to TRP 2) based on a repetition transmission related to one TRP (e.g., TRP 1) being performed a specific number of times. The specific number of times may be based on the repetition number (R value), the number of two or more PUCCH resources mapped to the codepoint of the PRI field, or the total number of TRPs (e.g., two) (operation in the b) of the proposal 2).

An indication related to the change in the Tx beam (RS information) related to the PUCCH transmission (an indication representing the a) or b)) may be based on the configuration information, a separate indicator included in the DCI, an indicator jointly encoded to the codepoint of the PRI field, a symbol duration related to the PUCCH resource, or characteristics related to the PUCCH transmission indication (e.g., the a) in a dynamic indication, and the b) in a semi-static indication).

For example, an operation of the UE (100/200 of FIG. 14) in the step S1030 to transmit the PUCCH to the BS (100/200 of FIG. 14) may be implemented by the device of FIGS. 13 to 17 to be described below. For example, referring to FIG. 14, one or more processors 102 may control one or more transceivers 106 and/or one or more memories 104 so as to transmit the PUCCH to the BS 200, and the one or more transceivers 106 may transmit UL channel/RS to the BS 200.

The above-described operations have been merely described based on the UE for convenience of explanation, and do not limit the application range of the above-described embodiments to the UE operation. Specifically, the above-described embodiments can be applied to the BS operation. That is, the operations according to the respective steps S1010 to S1030 described above can be interpreted/applied as the BS operation. The transmission operation of the UE can be interpreted/applied as the reception operation of the BS (e.g., TRP 1/TRP2), and the reception operation of the UE can be interpreted/applied as the transmission operation of the BS (e.g., TRP 1/TRP2).

As mentioned above, the above-described UE operation and/or BS operation (e.g., the operation based on at least one of the proposal 1 (1-1, 1-2, 1-3) and the proposal 2) may be implemented by a device to be described below (e.g., FIGS. 13 to 17). For example, the UE may correspond to a transmission device/a first device, and the BS may correspond to a reception device/a second device. In some cases, the reverse case may also be considered. The above-described UE operation and/or BS operation (e.g., the operation based on at least one of the proposal 1 (1-1, 1-2, 1-3) and the proposal 2) may be processed by a processor (102/202) of FIG. 14. The above-described UE operation and/or BS operation (e.g., the operation based on at least one of the proposal 1 (1-1, 1-2, 1-3) and the proposal 2) may be stored in a memory (e.g., a memory 104/204 of FIG. 14) in the form of a command/program (e.g., instruction(s), executable code(s)) for running at least one processor.

The embodiments described above are described from a UE operation perspective in detail below with reference to FIG. 11. Methods to be described below are distinguished merely for convenience of description. Therefore, it is obvious that partial configuration of any one method can be replaced by partial configuration of another method, or methods can be combined and applied.

FIG. 11 is a flowchart illustrating a method for a UE to transmit a physical uplink control channel in a wireless communication system according to an embodiment of the present disclosure.

Referring to FIG. 11, a method for a UE to transmit a physical uplink control channel (PUCCH) in a wireless communication system according to an embodiment of the present disclosure includes a step S1110 of receiving configuration information related to the PUCCH, and a step S1120 of transmitting the PUCCH based on the configuration information.

In the step S1110, the UE receives, from a base station (BS), the configuration information related to the physical uplink control channel (PUCCH).

According to an embodiment, the PUCCH may be related to HARQ-ACK information.

According to the step S1110, an operation of the UE (100/200 of FIGS. 13 to 17) to receive the configuration information related to the PUCCH from the BS (100/200 of FIGS. 13 to 17) may be implemented by a device of FIGS. 13 to 17. For example, referring to FIG. 14, one or more processors 102 may control one or more transceivers 106 and/or one or more memories 104 so as to receive the configuration information related to the PUCCH from the BS 200.

In the step S1120, the UE transmits the PUCCH to the BS based on the configuration information.

According to an embodiment, the PUCCH may be repeatedly transmitted based on a specific repetition factor. The specific repetition factor may be configured based on a PUCCH resource for transmission of the PUCCH.

According to an embodiment, a value of the specific repetition factor may be determined based on at least one of pre-configured criteria.

The pre-configured criteria may be defined based on at least one of the embodiments according to the proposal 1-1, the proposal 1-2, the proposal 1-3, and the proposal 2.

For example, the pre-configured criteria may be defined based on the proposal 1-1.

The pre-configured criteria may be related to at least one of i) a PUCCH format, ii) a number of symbols related to the PUCCH resource, iii) a number of resource elements (REs) related to the PUCCH resource, or iv) a PUCCH resource set index.

According to an embodiment, the value of the specific repetition factor may be determined based on the PUCCH format related to the PUCCH.

According to an embodiment, the value of the specific repetition factor may be determined based on the number of symbols configured in the PUCCH resource.

According to an embodiment, the value of the specific repetition factor may be determined based on the number of REs capable of mapping uplink control information (UCI) in the PUCCH resource related to the PUCCH.

According to an embodiment, the value of the specific repetition factor may be determined based on the PUCCH resource set index to which the PUCCH resource related to the PUCCH belongs.

For example, the pre-configured criteria may be defined based on a repetition level of the proposal 1-1.

The pre-configured criteria may be based on a plurality of repetition levels.

A specific repetition level among the plurality of repetition levels may be determined based on the number of symbols configured in the PUCCH resource. The value of the specific repetition factor may be determined based on the specific repetition level.

For example, the pre-configured criteria may be related to a specific field of downlink control information (DCI).

According to an embodiment, the value of the specific repetition factor may be determined based on a time domain resource allocation (TDRA) field for time domain resource allocation of a physical downlink shared channel (PDSCH) of the DCI.

According to an embodiment, the value of the specific repetition factor may be determined based on a PDSCH-to-HARQ_feedback timing indicator field of the DCI.

According to an embodiment, the value of the specific repetition factor may be determined based on a value of a repetition factor related to the physical downlink shared channel (PDSCH) or a physical uplink shared channel (PUSCH) scheduled by the DCI.

According to an embodiment, the value of the specific repetition factor may be one of values mapped to PUCCH resources indicated by a PUCCH Resource Indicator (PRI) field of the DCI.

A value for determining the specific repetition factor may be determined based on the pre-configured criteria described above.

According to an embodiment, the value of the specific repetition factor may be determined based on i) a value of a pre-configured repetition factor and ii) a specific value based on the pre-configured criteria.

The value of the specific repetition factor may be determined as i) a value obtained by multiplying or dividing the value of the pre-configured repetition factor by the specific value or ii) a value obtained by adding or subtracting the specific value to or from the value of the pre-configured repetition factor.

A performing method (inter-slot repetition/intra-slot repetition) of a PUCCH repetition may be determined based on the pre-configured criteria described above.

According to an embodiment, the value of the specific repetition factor may be determined in units of slot or symbol. The transmission of the PUCCH may be performed based on the intra-slot repetition or the inter-slot repetition.

According to the step S1 120, an operation of the UE (100/200 of FIGS. 13 to 17) to transmit the PUCCH to the BS (100/200 of FIGS. 13 to 17) based on the configuration information may be implemented by the device of FIGS. 13 to 17. For example, referring to FIG. 14, one or more processors 102 may control one or more transceivers 106 and/or one or more memories 104 so as to transmit the PUCCH to the BS 200 based on the configuration information.

FIG. 12 is a flowchart illustrating a method for a base station to receive a physical uplink control channel in a wireless communication system according to another embodiment of the present disclosure.

Referring to FIG. 12, a method for a base station (BS) to receive a physical uplink control channel (PUCCH) in a wireless communication system according to another embodiment of the present disclosure includes a step S1210 of transmitting configuration information related to the PUCCH, and a step S1220 of receiving the PUCCH based on the configuration information.

In the step S1210, the base station transmits, to a UE, the configuration information related to the physical uplink control channel (PUCCH).

According to an embodiment, the PUCCH may be related to HARQ-ACK information.

According to the step S1210, an operation of the base station (100/200 of FIGS. 13 to 17) to transmit the configuration information related to the PUCCH to the UE (100/200 of FIGS. 13 to 17) may be implemented by a device of FIGS. 13 to 17. For example, referring to FIG. 14, one or more processors 202 may control one or more transceivers 206 and/or one or more memories 204 so as to transmit the configuration information related to the PUCCH to the UE 100.

In the step S1220, the base station receives, from the UE, the PUCCH based on the configuration information.

According to an embodiment, the PUCCH may be repeatedly transmitted based on a specific repetition factor. The specific repetition factor may be configured based on a PUCCH resource for transmission of the PUCCH.

According to an embodiment, a value of the specific repetition factor may be determined based on at least one of pre-configured criteria.

The pre-configured criteria may be defined based on at least one of the embodiments according to the proposal 1-1, the proposal 1-2, the proposal 1-3, and the proposal 2.

For example, the pre-configured criteria may be defined based on the proposal 1-1.

The pre-configured criteria may be related to at least one of i) a PUCCH format, ii) a number of symbols related to the PUCCH resource, iii) a number of resource elements (REs) related to the PUCCH resource, or iv) a PUCCH resource set index.

According to an embodiment, the value of the specific repetition factor may be determined based on the PUCCH format related to the PUCCH.

According to an embodiment, the value of the specific repetition factor may be determined based on the number of symbols configured in the PUCCH resource.

According to an embodiment, the value of the specific repetition factor may be determined based on the number of REs capable of mapping uplink control information (UCI) in the PUCCH resource related to the PUCCH.

According to an embodiment, the value of the specific repetition factor may be determined based on the PUCCH resource set index to which the PUCCH resource related to the PUCCH belongs.

For example, the pre-configured criteria may be defined based on a repetition level of the proposal 1-1.

The pre-configured criteria may be based on a plurality of repetition levels.

A specific repetition level among the plurality of repetition levels may be determined based on the number of symbols configured in the PUCCH resource. The value of the specific repetition factor may be determined based on the specific repetition level.

For example, the pre-configured criteria may be related to a specific field of downlink control information (DCI).

According to an embodiment, the value of the specific repetition factor may be determined based on a time domain resource allocation (TDRA) field for time domain resource allocation of a physical downlink shared channel (PDSCH) of the DCI.

According to an embodiment, the value of the specific repetition factor may be determined based on a PDSCH-to-HARQ_feedback timing indicator field of the DCI.

According to an embodiment, the value of the specific repetition factor may be determined based on a value of a repetition factor related to the physical downlink shared channel (PDSCH) or a physical uplink shared channel (PUSCH) scheduled by the DCI.

According to an embodiment, the value of the specific repetition factor may be one of values mapped to PUCCH resources indicated by a PUCCH Resource Indicator (PRI) field of the DCI.

A value for determining the specific repetition factor may be determined based on the pre-configured criteria described above.

According to an embodiment, the value of the specific repetition factor may be determined based on i) a value of a pre-configured repetition factor and ii) a specific value based on the pre-configured criteria.

The value of the specific repetition factor may be determined as i) a value obtained by multiplying or dividing the value of the pre-configured repetition factor by the specific value or ii) a value obtained by adding or subtracting the specific value to or from the value of the pre-configured repetition factor.

A performing method (inter-slot repetition/intra-slot repetition) of a PUCCH repetition may be determined based on the pre-configured criteria described above.

According to an embodiment, the value of the specific repetition factor may be determined in units of slot or symbol. The transmission of the PUCCH may be performed based on the intra-slot repetition or the inter-slot repetition.

According to the step S 1220, an operation of the base station (100/200 of FIGS. 13 to 17) to receive the PUCCH based on the configuration information from the UE (100/200 of FIGS. 13 to 17) may be implemented by the device of FIGS. 13 to 17. For example, referring to FIG. 14, one or more processors 202 may control one or more transceivers 206 and/or one or more memories 204 so as to receive the PUCCH based on the configuration information from the UE 100.

## Example of communication system applied to present disclosure

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

FIG. 13 illustrates a communication system 1 applied to the present disclosure.

Referring to FIG. 13, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

## Example of wireless device applied to the present disclosure

FIG. 14 illustrates wireless devices applicable to the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

**Example of signal processing circuit applied to the present disclosure**

FIG. 15 illustrates a signal processing circuit for a transmission signal.

Referring to FIG. 15, a signal processing circuit 1000 may include scramblers 1010, modulators 1020, a layer mapper 1030, a precoder 1040, resource mappers 1050, and signal generators 1060. An operation/function of FIG. 15 may be performed, without being limited to, the processors 102 and 202 and/or the transceivers 106 and 206 of FIG. 14. Hardware elements of FIG. 15 may be implemented by the processors 102 and 202 and/or the transceivers 106 and 206 of FIG. 14. For example, blocks 1010 to 1060 may be implemented by the processors 102 and 202 of FIG. 14. Alternatively, the blocks 1010 to 1050 may be implemented by the processors 102 and 202 of FIG. 14 and the block 1060 may be implemented by the transceivers 106 and 206 of FIG. 14.

Codewords may be converted into radio signals via the signal processing circuit 1000 of FIG. 15. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 15. For example, the wireless devices (e.g., 100 and 200 of FIG. 14) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

**Example of application of wireless device applied to the present disclosure**

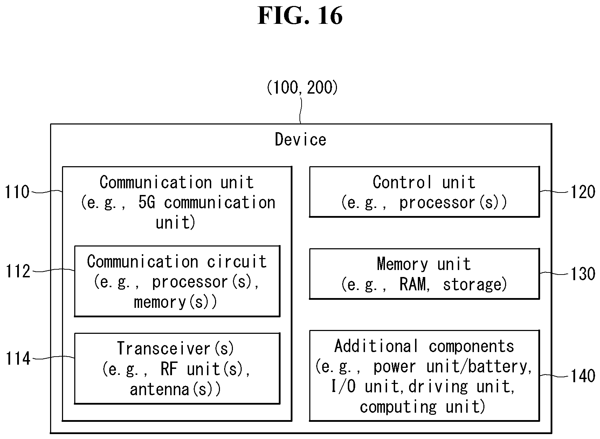

FIG. 16 illustrates another example of a wireless device applied to the present disclosure.

The wireless device may be implemented in various forms according to a use-case/service (refer to FIG. 13). Referring to FIG. 16, wireless devices 100 and 200 may correspond to the wireless devices 100 and 200 of FIG. 14 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 14. For example, the transceiver(s) 114 may include the one or more transceivers 106 and 206 and/or the one or more antennas 108 and 208 of FIG. 14. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 13), the vehicles (100b-1 and 100b-2 of FIG. 13), the XR device (100c of FIG. 13), the hand-held device (100d of FIG. 13), the home appliance (100e of FIG. 13), the IoT device (100f of FIG. 13), a digital broadcast terminal, a hologram device, a public safety device, an MTC device, a medicine device, a fintech device (or a finance device), a security device, a climate/environment device, the AI server/device (400 of FIG. 13), the BSs (200 of FIG. 13), a network node, etc. The wireless device may be used in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

**Example of hand-held device applied to the present disclosure**

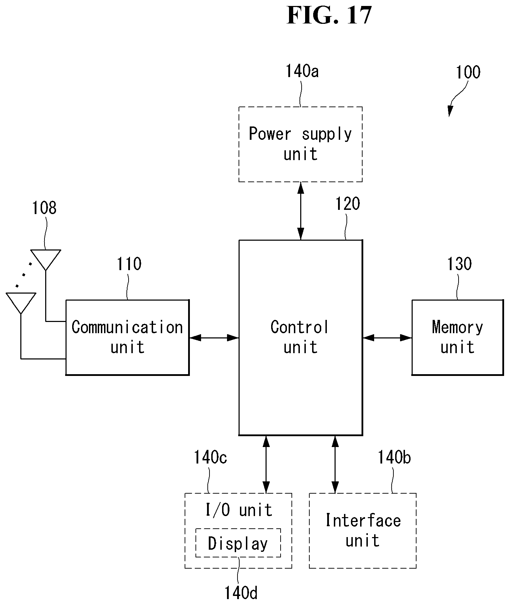

FIG. 17 illustrates a hand-held device applied to the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 17, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to 140c correspond to the blocks 110 to 130/140 of FIG. 16, respectively.

The communication unit 110 may transmit/receive a signal (e.g., data, a control signal, etc.) to/from another wireless device and eNBs. The control unit 120 may perform various operations by controlling components of the portable device 1010. The control unit 120 may include an Application Processor (AP). The memory unit 130 may store data/parameters/programs/codes/instructions required for driving the portable device 1010. Further, the memory unit 130 may store input/output data/information, etc. The power supply unit 140a may supply power to the portable device 1010 and include a wired/wireless charging circuit, a battery, and the like. The interface unit 140b may support a connection between the portable device 1010 and another external device. The interface unit 140b may include various ports (e.g., an audio input/output port, a video input/output port) for the connection with the external device. The input/output unit 140c may receive or output a video information/signal, an audio information/signal, data, and/or information input from a user. The input/output unit 140c may include a camera, a microphone, a user input unit, a display unit 140d, a speaker, and/or a haptic module.

As one example, in the case of data communication, the input/output unit 140c may acquire information/signal (e.g., touch, text, voice, image, and video) input from the user and the acquired information/signal may be stored in the memory unit 130. The communication unit 110 may transform the information/signal stored in the memory into the radio signal and directly transmit the radio signal to another wireless device or transmit the radio signal to the eNB. Further, the communication unit 110 may receive the radio signal from another wireless device or eNB and then reconstruct the received radio signal into original information/signal. The reconstructed information/signal may be stored in the memory unit 130 and then output in various forms (e.g., text, voice, image, video, haptic) through the input/output unit 140c.

Here, the wireless communication technology implemented in the wireless devices 100 and 200 of the present disclosure may include a narrowband Internet of Things for low-power communication as well as LTE, NR, and 6G. In this case, for example, NB-IoT technology may be an example of low power wide area network (LPWAN) technology, and may be implemented in standards such as LTE Cat NB1 and/or LTE Cat NB2, and is limited to the above-described names. Additionally or alternatively, the wireless communication technology implemented in the wireless devices 100 and 200 of the present disclosure may perform communication based on LTE-M technology. In this case, as an example, the LTE-M technology may be an example of an LPWAN technology, and may be called by various names such as enhanced machine type communication (eMTC). For example, the TE-M technology may be implemented in at least one of various standards of 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described name. Additionally or alternatively, the wireless communication technology implemented in the wireless devices 100 and 200 of the present disclosure may include at least one of ZigBee, Bluetooth, and Low Power Wide Area Network (LPWAN) considering low power communication, and is not limited to the above-described name. For example, the ZigBee technology may create personal area networks (PANs) related to small/low-power digital communication based on various standards such as IEEE 802.15.4, and may be called by various names.

The embodiments described above are implemented by combinations of components and features of the disclosure in predetermined forms. Each component or feature should be considered selectively unless specified separately. Each component or feature may be carried out without being combined with another component or feature. Moreover, some components and/or features are combined with each other and may implement embodiments of the disclosure. The order of operations described in embodiments of the disclosure may be changed. Some components or features of one embodiment may be included in another embodiment, or may be replaced by corresponding components or features of another embodiment. It is apparent that some claims referring to specific claims may be combined with another claims referring to the claims other than the specific claims to constitute the embodiment or add new claims by means of amendment after the application is filed.

Embodiments of the disclosure may be implemented by various means, for example, hardware, firmware, software, or combinations thereof. When embodiments are implemented by hardware, one embodiment of the disclosure may be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and the like.

When embodiments are implemented by firmware or software, one embodiment of the disclosure may be implemented by modules, procedures, functions, etc. Performing functions or operations described above. Software code may be stored in a memory and may be driven by a processor. The memory is provided inside or outside the processor and may exchange data with the processor by various well-known means.

It is apparent to those skilled in the art that the disclosure may be embodied in other specific forms without departing from essential features of the disclosure. Accordingly, the aforementioned detailed description should not be construed as limiting in all aspects and should be considered as illustrative. The scope of the disclosure should be determined by rational construing of the appended claims, and all modifications within an equivalent scope of the disclosure are included in the scope of the disclosure.

**Claims**

1. A method of a user equipment (UE) to transmit a physical uplink control channel (PUCCH) in a wireless communication system, the method comprising:

   receiving configuration information related to the physical uplink control channel (PUCCH); and
   transmitting the PUCCH based on the configuration information,
   wherein the PUCCH is repeatedly transmitted based on a specific repetition factor,
   wherein the specific repetition factor is configured based on a PUCCH resource for a transmission of the PUCCH, and
   wherein a value of the specific repetition factor is determined based on at least one of pre-configured criteria.

2. The method of claim 1, wherein the pre-configured criteria are related to at least one of i) a PUCCH format, ii) a number of symbols related to the PUCCH resource, iii) a number of resource elements (REs) related to the PUCCH resource, or iv) a PUCCH resource set index.

3. The method of claim 2, wherein the value of the specific repetition factor is determined based on the PUCCH format related to the PUCCH.

4. The method of claim 2, wherein the value of the specific repetition factor is determined based on the number of symbols configured in the PUCCH resource.

5.  The method of claim 2, wherein the value of the specific repetition factor is determined based on the number of REs capable of mapping uplink control information (UCI) in the PUCCH resource related to the PUCCH.

6.  The method of claim 2, wherein the value of the specific repetition factor is determined based on the PUCCH resource set index to which the PUCCH resource related to the PUCCH belongs.

7.  The method of claim 1, wherein the pre-configured criteria are based on a plurality of repetition levels.

8.  The method of claim 7, wherein a specific repetition level among the plurality of repetition levels is determined based on the number of symbols configured in the PUCCH resource, and
    wherein the value of the specific repetition factor is determined based on the specific repetition level.

9.  The method of claim 1, wherein the pre-configured criteria are related to a specific field of downlink control information (DCI).

10. The method of claim 9, wherein the value of the specific repetition factor is determined based on a time domain resource allocation (TDRA) field for a time domain resource allocation of a physical downlink shared channel (PDSCH) of the DCI.

11. The method of claim 9, wherein the value of the specific repetition factor is determined based on a PDSCH-to-HARQ_feedback timing indicator field of the DCI.

12. The method of claim 9, wherein the value of the specific repetition factor is determined based on a value of a repetition factor related to a physical downlink shared channel (PDSCH) or a physical uplink shared channel (PUSCH) scheduled by the DCI.

13. The method of claim 9, wherein the value of the specific repetition factor is one of values mapped to PUCCH resources indicated by a PUCCH Resource Indicator (PRI) field of the DCI.

14. The method of claim 1, wherein the value of the specific repetition factor is determined based on i) a value of a pre-configured repetition factor and ii) a specific value based on the pre-configured criteria.

15. The method of claim 14, wherein the value of the specific repetition factor is determined as i) a value obtained by multiplying or dividing the value of the pre-configured repetition factor by the specific value or ii) a value obtained by adding or subtracting the specific value to or from the value of the pre-configured repetition factor.

16. The method of claim 1, wherein the value of the specific repetition factor is determined in units of slot or symbol.

17. The method of claim 16, wherein the transmission of the PUCCH is performed based on an intra-slot repetition or an inter-slot repetition.

18. The method of claim 1, wherein the PUCCH is related to HARQ-ACK information.

19. A user equipment (UE) transmitting a physical uplink control channel (PUCCH) in a wireless communication system, the UE comprising:

    one or more transceivers;
    one or more processors configured to control the one or more transceivers; and
    one or more memories operably connected to the one or more processors,
    wherein the one or more memories store instructions, that are configured to allow the one or more processors to perform operations, based on being executed by the one or more processors,
    wherein the operations comprise:

    receiving configuration information related to the physical uplink control channel (PUCCH); and
    transmitting the PUCCH based on the configuration information,
    wherein the PUCCH is repeatedly transmitted based on a specific repetition factor,
    wherein the specific repetition factor is configured based on a PUCCH resource for a transmission of the PUCCH, and

wherein a value of the specific repetition factor is determined based on at least one of pre-configured criteria.

20. A device comprising:

one or more memories; and
one or more processors functionally connected to the one or more memories,
wherein the one or more memories store instructions, that are configured to allow the one or more processors to perform operations, based on being executed by the one or more processors,
wherein the operations comprise:

receiving configuration information related to a physical uplink control channel (PUCCH); and
transmitting the PUCCH based on the configuration information,
wherein the PUCCH is repeatedly transmitted based on a specific repetition factor,
wherein the specific repetition factor is configured based on a PUCCH resource for a transmission of the PUCCH, and
wherein a value of the specific repetition factor is determined based on at least one of pre-configured criteria.

21. One or more non-transitory computer readable mediums storing one or more instructions,

wherein the one or more instructions are configured, based on being executed by one or more processors, to allow the one or more processors to perform operations,
wherein the operations comprise:

receiving configuration information related to a physical uplink control channel (PUCCH); and
transmitting the PUCCH based on the configuration information,
wherein the PUCCH is repeatedly transmitted based on a specific repetition factor,
wherein the specific repetition factor is configured based on a PUCCH resource for a transmission of the PUCCH, and
wherein a value of the specific repetition factor is determined based on at least one of pre-configured criteria.

22. A method of a base station to receive a physical uplink control channel (PUCCH) in a wireless communication system, the method comprising:

transmitting configuration information related to the physical uplink control channel (PUCCH); and
receiving the PUCCH based on the configuration information,
wherein the PUCCH is repeatedly transmitted based on a specific repetition factor,
wherein the specific repetition factor is configured based on a PUCCH resource for a transmission of the PUCCH, and
wherein a value of the specific repetition factor is determined based on at least one of pre-configured criteria.

23. A base station receiving a physical uplink control channel (PUCCH) in a wireless communication system, the base station comprising:

one or more transceivers;
one or more processors configured to control the one or more transceivers; and
one or more memories operably connected to the one or more processors,
wherein the one or more memories store instructions, that are configured to allow the one or more processors to perform operations, based on being executed by the one or more processors,
wherein the operations comprise:

transmitting configuration information related to the physical uplink control channel (PUCCH); and
receiving the PUCCH based on the configuration information,
wherein the PUCCH is repeatedly transmitted based on a specific repetition factor,
wherein the specific repetition factor is configured based on a PUCCH resource for a transmission of the PUCCH, and
wherein a value of the specific repetition factor is determined based on at least one of pre-configured criteria.

# FIG. 1

# FIG. 2

# FIG. 3

Radio Frame 10ms

Fixed Size

Subframe 1ms

| 0 | 1 | 2 | 3 | 4 | 5 | 6 | 7 | 8 | 9 |

Subframe ={1, 2, 4} Slots

Slot

| 0 | 1 | 2 | 3 |

Slot={7, 14} Symbols

Size depends on subcarrier spacing

Symbol

| 0 | 1 | 2 | 3 | 4 | 5 | 6 | 7 | 8 | 9 | 10 | 11 | 12 | 13 |

Mini-Slot
(URLLC)

Mini-Slot={2, 4, 7} Symbols — ffs

# FIG. 4

One subframe

$14 \cdot 2^{\mu}$ OFDM symbols

$k = N_{RB}^{\mu} N_{SC}^{RB} - 1$

$N_{RB}^{\mu} N_{SC}^{RB} - 1$ Subcarriers

$N_{SC}^{RB}$ Subcarriers

Resource Block

Resource Element
- $(k, \bar{l})$ in resource grid
- $(k, l)$ in resource block

$k = 0$

$l = 0$

$l = 14 \cdot 2^{\mu} - 1$

# FIG. 5

Antenna port A
Antenna port B } Numerology X

Antenna port A
Antenna port B } Numerology Y

# FIG. 6

| INITIAL CELL SEARCH | SYSTEM INFORMATION RECEPTION | RANDOM ACCESS PROCEDURE | GENERAL DL/UL Tx/Rx |

PSS/SSS& [DLRS]& PBCH

PDCCH/ PDSCH (BCCH)

PRACH

PDCCH/ PDSCH

PUSCH

PDCCH/ PDSCH

PDCCH/ PDSCH

PUSCH/ PUCCH

S601    S602    S603    S604    S605    S606    S607    S608

· DL/UL ACK/NACK
· UE CQI/PMI RI REPORT
  USING PUSCH AND PUCCH

# FIG. 7

UE                                                              BS

S701

Downlink scheduling

S702

DCI (PDCCH) for downlink scheduling

S703

Downlink data (PDSCH)

# FIG. 8

UE                                                              BS

S801

Uplink scheduling

S802

DCI (PDCCH) for uplink scheduling

S803

Uplink data (PUSCH)

# FIG. 9

TRP 1

Layer group #1
for CW #1

TRP 2

Layer group #2
for CW #1

UE1

(a)

TRP 1

Layer group #1
for CW #1

TRP 2

Layer group #2
for CW #2

UE1

(b)

## FIG. 10

Network side

| TRP 2 | TRP 1 | UE |

S1010
Configuration information →

S1020-1
DCI →

S1020-2
DCI →

S1030-1
← PUCCH

S1030-2
← PUCCH

## FIG. 11

Start

Receive configuration information related to PUCCH —S1110

Transmit PUCCH based on configuration information —S1120

End

# FIG. 12

```
        ┌─────────┐
        │  Start  │
        └─────────┘
             │
             ▼
┌──────────────────────────────────────────────────┐
│ Transmit configuration information related to PUCCH│──S1210
└──────────────────────────────────────────────────┘
             │
             ▼
┌──────────────────────────────────────────────────┐
│   Receive PUCCH based on configuration information │──S1220
└──────────────────────────────────────────────────┘
             │
             ▼
        ┌─────────┐
        │   End   │
        └─────────┘
```

# FIG. 13

## FIG. 14

## FIG. 15

1000(102/106, 202/206)

# FIG. 16

(100, 200)

Device

| | |
|---|---|
| 110 — Communication unit (e.g., 5G communication unit) | Control unit (e.g., processor(s)) — 120 |
| 112 — Communication circuit (e.g., processor(s), memory(s)) | Memory unit (e.g., RAM, storage) — 130 |
| 114 — Transceiver(s) (e.g., RF unit(s), antenna(s)) | Additional components (e.g., power unit/battery, I/O unit, driving unit, computing unit) — 140 |

# FIG. 17

## INTERNATIONAL SEARCH REPORT

| International application No. |
| --- |
| **PCT/KR2021/014825** |

**A.     CLASSIFICATION OF SUBJECT MATTER**

**H04L 5/00**(2006.01)i; **H04L 1/08**(2006.01)i; **H04B 7/06**(2006.01)i; **H04W 52/14**(2009.01)i; **H04W 72/04**(2009.01)i; **H04W 72/12**(2009.01)i

According to International Patent Classification (IPC) or to both national classification and IPC

**B.     FIELDS SEARCHED**

Minimum documentation searched (classification system followed by classification symbols)

H04L 5/00(2006.01); H04L 1/08(2006.01); H04L 1/16(2006.01); H04W 28/02(2009.01); H04W 28/12(2009.01); H04W 52/14(2009.01); H04W 52/54(2009.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 물리 상향링크 제어 채널(Physical Uplink Control Channel, PUCCH), 반복(repetition), 인자(factor), 심볼(symbol), 자원(resource), 레벨(level), DCI(Downlink Control Information), 슬롯(slot)

**C.     DOCUMENTS CONSIDERED TO BE RELEVANT**

| Category* | Citation of document, with indication, where appropriate, of the relevant passages | Relevant to claim No. |
| --- | --- | --- |
| X | US 2019-0313342 A1 (SAMSUNG ELECTRONICS CO., LTD.) 10 October 2019 (2019-10-10)<br>See paragraphs [0088], [0101], [0204]-[0205], [0212] and [0215]; and claims 3 and 15-17. | 1-6,9-23 |
| Y | | 7-8 |
| Y | KR 10-2017-0078591 A (LG ELECTRONICS INC.) 07 July 2017 (2017-07-07)<br>See claim 2. | 7-8 |
| A | US 2020-0329486 A1 (QUALCOMM INCORPORATED) 15 October 2020 (2020-10-15)<br>See paragraphs [0117]-[0124]; and figure 5. | 1-23 |
| A | WO 2019-160846 A1 (SHARP LABORATORIES OF AMERICA, INC. et al.) 22 August 2019 (2019-08-22)<br>See paragraphs [0044]-[0070]. | 1-23 |

☑ Further documents are listed in the continuation of Box C.          ☑ See patent family annex.

| |
| --- |
| *     Special categories of cited documents: |
| "A"   document defining the general state of the art which is not considered to be of particular relevance |
| "D"   document cited by the applicant in the international application |
| "E"   earlier application or patent but published on or after the international filing date |
| "L"   document which may throw doubts on priority claim(s) or which is cited to establish the publication date of another citation or other special reason (as specified) |
| "O"   document referring to an oral disclosure, use, exhibition or other means |
| "P"   document published prior to the international filing date but later than the priority date claimed |
| "T"   later document published after the international filing date or priority date and not in conflict with the application but cited to understand the principle or theory underlying the invention |
| "X"   document of particular relevance; the claimed invention cannot be considered novel or cannot be considered to involve an inventive step when the document is taken alone |
| "Y"   document of particular relevance; the claimed invention cannot be considered to involve an inventive step when the document is combined with one or more other such documents, such combination being obvious to a person skilled in the art |
| "&"   document member of the same patent family |

| Date of the actual completion of the international search | Date of mailing of the international search report |
| --- | --- |
| **28 January 2022** | **28 January 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| | International application No. |
|---|---|
| | **PCT/KR2021/014825** |

| C. | DOCUMENTS CONSIDERED TO BE RELEVANT | |
|---|---|---|
| Category* | Citation of document, with indication, where appropriate, of the relevant passages | Relevant to claim No. |
| A | WO 2020-026296 A1 (NTT DOCOMO, INC.) 06 February 2020 (2020-02-06)<br>See paragraphs [0045]-[0067]. | 1-23 |

Form PCT/ISA/210 (second sheet) (July 2019)

**INTERNATIONAL SEARCH REPORT**
Information on patent family members

International application No.

**PCT/KR2021/014825**

| Patent document cited in search report | | | Publication date (day/month/year) | Patent family member(s) | | | Publication date (day/month/year) |
|---|---|---|---|---|---|---|---|
| US | 2019-0313342 | A1 | 10 October 2019 | CN | 111971924 | A | 20 November 2020 |
| | | | | EP | 3759862 | A1 | 06 January 2021 |
| | | | | JP | 2021-521673 | A | 26 August 2021 |
| | | | | KR | 10-2020-0129124 | A | 17 November 2020 |
| | | | | US | 10708866 | B2 | 07 July 2020 |
| | | | | WO | 2019-194655 | A1 | 10 October 2019 |
| KR | 10-2017-0078591 | A | 07 July 2017 | CN | 107113137 | A | 29 August 2017 |
| | | | | CN | 107113137 | B | 29 September 2020 |
| | | | | EP | 3214793 | A2 | 06 September 2017 |
| | | | | EP | 3214793 | B1 | 26 June 2019 |
| | | | | EP | 3525384 | A1 | 14 August 2019 |
| | | | | EP | 3525384 | B1 | 24 March 2021 |
| | | | | JP | 2017-534193 | A | 16 November 2017 |
| | | | | JP | 2020-005265 | A | 09 January 2020 |
| | | | | JP | 6880119 | B2 | 02 June 2021 |
| | | | | US | 10231220 | B2 | 12 March 2019 |
| | | | | US | 10863488 | B2 | 08 December 2020 |
| | | | | US | 2017-0245265 | A1 | 24 August 2017 |
| | | | | US | 2019-0159200 | A1 | 23 May 2019 |
| | | | | WO | 2016-068542 | A2 | 06 May 2016 |
| | | | | WO | 2016-068542 | A3 | 23 June 2016 |
| US | 2020-0329486 | A1 | 15 October 2020 | CN | 113632400 | A | 09 November 2021 |
| | | | | KR | 10-2021-0151801 | A | 14 December 2021 |
| | | | | SG | 11202109935 | A | 28 October 2021 |
| | | | | WO | 2020-210357 | A1 | 15 October 2020 |
| WO | 2019-160846 | A1 | 22 August 2019 | CN | 111955025 | A | 17 November 2020 |
| | | | | EP | 3753287 | A1 | 23 December 2020 |
| | | | | US | 2020-0404692 | A1 | 24 December 2020 |
| WO | 2020-026296 | A1 | 06 February 2020 | AU | 2018-435434 | A1 | 18 March 2021 |
| | | | | CN | 112753183 | A | 04 May 2021 |
| | | | | EP | 3832928 | A1 | 09 June 2021 |
| | | | | US | 2021-0336726 | A1 | 28 October 2021 |
| | | | | WO | 2020-026296 | A1 | 05 August 2021 |

Form PCT/ISA/210 (patent family annex) (July 2019)